(19) Europäisches Patentamt
European Patent Office
Office européen des brevets

(11) **EP 3 845 599 A1**

(12) **EUROPEAN PATENT APPLICATION**
published in accordance with Art. 153(4) EPC

(43) Date of publication:
07.07.2021 Bulletin 2021/27

(51) Int Cl.:
*C08L 53/02* (2006.01)     *C08J 5/18* (2006.01)
*D02G 3/02* (2006.01)

(21) Application number: 19853666.6

(22) Date of filing: 28.08.2019

(86) International application number:
PCT/JP2019/033703

(87) International publication number:
WO 2020/045496 (05.03.2020 Gazette 2020/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(30) Priority: 28.08.2018 JP 2018159038

(71) Applicant: Zeon Corporation
Tokyo 100-8246 (JP)

(72) Inventors:
• ISOBE, Kousuke
  Tokyo 100-8246 (JP)
• HASHIMOTO, Sadaharu
  Tokyo 100-8246 (JP)
• ISHII, Yuta
  Tokyo 100-8246 (JP)

(74) Representative: Gerauer, Marc Philippé
Kraus & Weisert
Patentanwälte PartGmbB
Thomas-Wimmer-Ring 15
DE-80539 München (DE)

(54) **COMPOSITION AND ELASTIC BODY**

(57) A composition comprising a block copolymer A represented by general formula (A) : $Ar1^a$-$D^a$-$Ar2^a$, a block copolymer B represented by general formula (B) : $Ar1^b$-$D^b$-$Ar2^b$, and a block copolymer C represented by general formula (C) : $(Ar^c$-$D^c)_n$-X, wherein the content of the aromatic vinyl monomer unit of the block copolymer A is 40 to 50% by weight with respect to the total monomer unit constituting the block copolymer A, the content of the aromatic vinyl monomer unit of the block copolymer B is 20 to 30% by weight with respect to the total monomer unit constituting the block copolymer B, and the content of the aromatic vinyl monomer unit of the block copolymer C is less than 20% by weight with respect to the total monomer unit constituting the block copolymer C is provided.

**Description**

TECHNICAL FIELD

The present invention relates to a composition containing a block copolymer having an aromatic vinyl polymer block and a conjugated diene polymer block, and more particularly, to a composition having excellent formability and capable of obtaining an elastic body having little variation in film thickness, and having small permanent elongation, and an elastic body obtained from the composition.

BACKGROUND ART

Since an aromatic vinyl-conjugated diene-aromatic vinyl block copolymer is particularly rich in elasticity and flexible among thermoplastic elastomers, its application as a material for a stretchable film used in hygienic products such as paper diapers and sanitary products has become one of its representative applications.

In hygienic products such as paper diapers and sanitary products, elastic films are used in various parts because the following property and fit to the movement of the wearer are required. For example, in a hygienic product such as a pant-type diaper, which is a kind of paper diaper, it is necessary that the wearing position does not shift even if the wearer moves violently or wears for a long time, and therefore, the elastic film used is required to have both a high elastic modulus and a small permanent elongation.

In Patent Document 1, as a block copolymer composition in which, after forming into a film, a high elastic modulus and a small permanent elongation are compatible at a high level, and further, forming can be performed with good formability, Patent Document 1 proposes a block copolymer composition containing 100 parts by weight of a block copolymer comprising at least one aromatic vinyl polymer block and at least one conjugated diene polymer block, 25 to 150 parts by weight of an aromatic vinyl polymer, and 0.2 to 10 parts by weight of a fatty acid amide.

RELATED ART

PATENT DOCUMENTS

Patent Document 1: JP-A-2016-69565

SUMMARY OF THE INVENTION

PROBLEM TO BE SOLVED BY THE INVENTION

It is a first object of the present invention to provide a composition having excellent formability and capable of obtaining an elastic body having small variation in film thickness, and small permanent elongation.

Further, it is a second object of the present invention to provide a composition excellent in hue and low odor property and capable of obtaining an elastic body excellent in ozone crack resistance.

MEANS FOR SOLVING THE PROBLEM

As a result of extensive studies to achieve the first object, the present inventors have found that, when three block copolymers having different structures are used in combination and the weight average molecular weight of several blocks constituting each block copolymer and the content of an aromatic vinyl monomer unit in each block copolymer are appropriately adjusted, a composition having excellent formability can be obtained, and an elastic body having a small variation in film thickness and a small permanent elongation can be obtained, thereby completing the present invention.

That is, according to the present invention, there is provided a composition comprising a block copolymer A, a block copolymer B, and a block copolymer C, wherein

the block copolymer A is represented by general formula (A) : $Ar1^a$-Da-$Ar2^a$, where $Ar1^a$ is an aromatic vinyl polymer block having a weight average molecular weight of 5000 to 20000, $D^a$ is a conjugated diene polymer block, and $Ar2^a$ is an aromatic vinyl polymer block having a weight average molecular weight of more than 20000 and 400000 or less,

the block copolymer B is represented by general formula (B) : $Ar1^b$-$D^b$-$Ar2^b$, where $Ar1^b$ and $Ar2^b$ are each an aromatic vinyl polymer block having a weight average molecular weight of 5000 to 20000, and $D^b$ is a conjugated diene polymer block,

the block copolymer C is represented by general formula (C) : $(Ar^c$-$D^c)_n$-X, where $Ar^c$ is an aromatic vinyl polymer block, $D^c$ is a conjugated diene polymer block, "n" represents an integer of 2 or more, and X is a residue of coupling agent,

the content of the aromatic vinyl monomer unit of the block copolymer A is 40 to 50% by weight with respect to the total monomer unit constituting the block copolymer A,

the content of the aromatic vinyl monomer unit of the block copolymer B is 20 to 30% by weight with respect to the total monomer unit constituting the block copolymer B, and

the content of the aromatic vinyl monomer unit of the block copolymer C is less than 20% by weight with respect to the total monomer unit constituting the block copolymer C.

In the first composition according to the present invention, it is preferable that the vinyl bond content of the conjugated diene polymer block ($D^a$) is 1 to 20 mol%, and the weight average molecular weight of the conjugated diene polymer block ($D^a$) is 40000 to 400000.

In the first composition according to the present invention, it is preferable that the vinyl bond content of the conjugated diene polymer block ($D^b$) is 1 to 20 mol%, and the weight-average molecular weight of the conjugated diene polymer block ($D^b$) is 40000 to 400000.

In the first composition according to the present invention, it is preferable that the block copolymer A and the block copolymer B are obtained by a production method in which a polymer block is formed by sequentially polymerizing an aromatic vinyl monomer, a conjugated diene monomer, and an aromatic vinyl monomer in this order.

In the first composition according to the present invention, it is preferable that "n" in the general formula (C) is an integer of 2 to 4.

In the first composition according to the present invention, it is preferable that the vinyl bond content of the conjugated diene polymer block ($D^c$) is 1 to 20 mol%, and the weight-average molecular weight of the conjugated diene polymer block ($D^c$) is 20000 to 200000.

In the first composition according to the present invention, it is preferable that the block copolymer C is obtained by a production method in which an aromatic vinyl monomer and a conjugated diene monomer are polymerized to form a diblock chain, and the diblock chain and a coupling agent are reacted to perform coupling.

The first composition according to the present invention preferably further comprising a block copolymer D, wherein the block copolymer D is represented by general formula (D) : $Ar^d$-$D^d$, where $Ar^d$ is an aromatic vinyl polymer block, $D^d$ is a conjugated diene polymer block, and the content of the aromatic vinyl monomer unit of the block copolymer D is less than 20% by weight with respect to the total monomer unit constituting the block copolymer D.

The first composition according to the present invention preferably further comprising a wax, wherein the wax contains a linear hydrocarbon and a branched hydrocarbon, and the weight ratio (n-structure/iso-structure) of the linear hydrocarbon (n- structure) and the branched hydrocarbon (iso-structure) is 30/70 to 99/1, the melting point of the wax is less than 80°C, and the content of the wax in the composition is 0.1 to 5 parts by weight, with respect to 100 parts by weight of the total of block copolymers in the composition.

In addition, as a result of extensive studies to achieve the second object, the present inventors have found that, by adding a wax containing a linear hydrocarbon and a branched hydrocarbon in a specific weight ratio and having a relatively low melting point to a block copolymer, a composition excellent in hue and low odor property can be obtained, and an elastic body excellent in ozone crack resistance can be obtained, thereby completing the present invention.

Further, according to the present invention, there is provided a composition (hereinafter, it may be referred to as "second composition") comprising a block copolymer having at least one aromatic vinyl polymer block and at least one conjugated diene polymer block, and a wax, wherein the wax contains a linear hydrocarbon and a branched hydrocarbon, and the weight ratio (n-structure/iso-structure) of the linear hydrocarbon (n-structure) and the branched hydrocarbon (iso-structure) is 30/70 to 99/1, the melting point of the wax is less than 80°C, and the content of the wax in the composition is 0.1 to 5 parts by weight, with respect to 100 parts by weight of the block copolymer in the composition.

Further, according to the present invention, there is provided an elastic body obtained from the above first composition and second composition.

The elasticity body is preferably an elastic body for hygienic material.

The elastic body and the elastic body for hygienic material are preferably a film or yarn.

EFFECTS OF INVENTION

According to the present invention, it is possible to provide a first composition having excellent formability and capable of obtaining an elastic body having small variation in film thickness, and small permanent elongation.

In addition, according to the present invention, it is possible to provide a second composition excellent in hue and low odor property and capable of obtaining an elastic body excellent in ozone crack resistance.

DESCRIPTION OF EMBODIMENTS

The first composition according to the present invention contains a block copolymer A, a block copolymer B and a block copolymer C.

(Block copolymer A)

The block copolymer A is a copolymer represented by the following general formula (A):

General formula (A) :                Ar1$^a$-D$^a$-Ar2$^a$

(In the formula, Ar1$^a$ is an aromatic vinyl polymer block having a weight average molecular weight of 5000 to 20000, D$^a$ is a conjugated diene polymer block, and Ar2$^a$ is an aromatic vinyl polymer block having a weight average molecular weight of more than 20000 and 400000 or less.)

The aromatic vinyl polymer block (Ar1$^a$) and the aromatic vinyl polymer block (Ar2$^a$) are each a polymer block composed of aromatic vinyl monomer unit obtained by polymerizing an aromatic vinyl monomer as main repeating unit.

The aromatic vinyl monomer used to form the aromatic vinyl monomer unit for the aromatic vinyl polymer block (Ar1$^a$) and the aromatic vinyl polymer block (Ar2$^a$) may be any aromatic vinyl compound. Examples of usable aromatic vinyl monomers include styrene, $\alpha$-methylstyrene, 2-methylstyrene, 3-methylstyrene, 4-methylstyrene, 2-ethylstyrene, 3-ethylstyrene, 4-ethylstyrene, 2,4-diisopropylstyrene, 2,4-dimethylstyrene, 4-t-butylstyrene, 5-t-butyl-2-methylstyrene, 2-chlorostyrene, 3-chlorostyrene, 4-chlorostyrene, 4-bromostyrene, 2-methyl-4,6-dichlorostyrene, 2,4-dibromostyrene, vinylnaphthalene, and the like. Among these, use of styrene is preferred. These aromatic vinyl monomers can be used alone or in combination. When two of aromatic vinyl polymer blocks are present, each of them may be composed of the same aromatic vinyl monomer unit or may be composed of different aromatic vinyl monomer units.

The aromatic vinyl polymer block (Ar1$^a$) and the aromatic vinyl polymer block (Ar2$^a$) may contain another monomer unit as long as the aromatic vinyl monomer unit is the main repeating unit. Examples of monomers which form monomer unit other than the aromatic vinyl monomer unit contained in the aromatic vinyl polymer block (Ar1$^a$) and the aromatic vinyl polymer block (Ar2$^a$) include conjugated diene monomers such as 1,3-butadiene and isoprene (2-methyl-1,3-butadiene), $\alpha,\beta$-unsaturated nitrile monomers, unsaturated carboxylic acid monomers or acid anhydride monomers, unsaturated carboxylic acid ester monomers, non-conjugated diene monomers, and the like. The content of the monomer unit other than the aromatic vinyl monomer unit in the aromatic vinyl polymer block (Ar1$^a$) and the aromatic vinyl polymer block (Ar2$^a$) is preferably 20% by weight or less, more preferably 10% by weight or less, particularly preferably substantially 0% by weight. In other words, the aromatic vinyl polymer block (Ar1$^a$) and the aromatic vinyl polymer block (Ar2$^a$) are preferably composed of substantially only unit of one or two or more aromatic vinyl monomers, and particularly preferably composed of only styrene unit.

In the block copolymer A, the aromatic vinyl polymer block (Ar1$^a$) and the aromatic vinyl polymer block (Ar2$^a$) differ in weight average molecular weight. Since the first composition according to the present invention contains such an asymmetric block copolymer A, the first composition is excellent in formability, and it is possible to obtain an elastic body which has little variation in film thickness, and has small permanent elongation.

The weight average molecular weight of the aromatic vinyl polymer block (Ar1$^a$) is 5000 to 20000, more preferably 6000 to 18000, and still more preferably 7000 to 16000.

The weight average molecular weight of the aromatic vinyl polymer block (Ar2$^a$) is more than 20000 and 400000 or less, more preferably 25000 to 300000, and still more preferably 30000 to 200000.

The conjugated diene polymer block (D$^a$) is a polymer block composed of, as a main repeating unit, a conjugated diene monomer unit obtained by polymerizing a conjugated diene monomer.

The conjugated diene monomer used to form the conjugated diene monomer unit for the conjugated diene block (D$^a$) may be any conjugated diene compound. Examples thereof include 1,3-butadiene, isoprene, 2,3-dimethyl-1,3-butadiene, 2-chloro-1,3-butadiene, 1,3-pentadiene, 1,3-hexadiene, myrcene, farnesene, and the like. Among these, preferred is use of 1,3-butadiene and/or isoprene, and particularly preferred is use of isoprene. These conjugated diene monomers can be used alone or in combination. Furthermore, unsaturated bond of the conjugated diene block (D$^a$) may be partially subjected to a hydrogenation reaction.

The conjugated diene block (D$^a$) may contain another monomer unit as long as the conjugated diene monomer unit is the main repeating unit. Examples of monomers which form monomer unit other than the conjugated diene monomer unit contained in the conjugated diene block (D$^a$) include aromatic vinyl monomers such as styrene and $\alpha$-methylstyrene, $\alpha,\beta$-unsaturated nitrile monomers, unsaturated carboxylic acid monomers or acid anhydride monomers, unsaturated carboxylic acid ester monomers, non-conjugated diene monomers, and the like. The content of the monomer unit other than the conjugated diene monomer unit in the conjugated diene block (D$^a$) is preferably 20% by weight or less, more preferably 10% by weight or less, particularly preferably substantially 0% by weight. In other words, the conjugated diene block (D$^a$) is preferably composed of substantially only unit of one or two or more conjugated diene monomers, and particularly preferably composed of only isoprene unit.

Although not particularly limited, the vinyl bond content in the conjugated diene block (D$^a$) (total proportion of 1,2-vinyl bond unit and 3,4-vinyl bond unit in the total conjugated diene monomer unit included in the conjugated diene block (D$^a$)) is preferably 1 to 20 mol%, more preferably 2 to 15 mol%, particularly preferably 3 to 10 mol%. If the vinyl bond content is too large, the flexibility of the obtained elastic body tends to be impaired.

The weight average molecular weight of the conjugated diene polymer block ($D^a$) is preferably 40000 to 400000, more preferably 45000 to 350000, and still more preferably from 50000 to 300000.

The weight average molecular weight of the block copolymer A (that is, the weight average molecular weight of the entire block copolymer A) is preferably 65000 to 800000, more preferably 70000 to 700000, and still more preferably 75000 to 650000.

In the present invention, the weight average molecular weight of each polymer block and the weight average molecular weight of the entire block polymer are determined as a value in terms of polystyrene by measurement of high performance liquid chromatography.

Further, the weight average molecular weight of each polymer block and the weight average molecular weight of the entire block polymer can be controlled by adjusting the amount of each monomer to be used for forming each polymer block and the amount of the polymerization initiator to be used when obtaining the block copolymer by the polymerization reaction.

The content of the aromatic vinyl monomer unit of the block copolymer A is 40 to 50% by weight with respect to the total monomer unit constituting the block copolymer A. Since the first composition of the present invention contains an asymmetric block copolymer A containing an aromatic vinyl monomer unit at the above content, the first composition is excellent in formability, and it is possible to obtain an elastic body which has little variation in film thickness, and has small permanent elongation.

It is preferable that the block copolymer A is obtained by a production method in which a polymer block is formed by sequentially polymerizing an aromatic vinyl monomer, a conjugated diene monomer, and then an aromatic vinyl monomer in this order. Therefore, it is preferable that the block copolymer A does not contain a residue of a coupling agent. Details of such a production method will be described later.

(Block copolymer B)

The block copolymer B is a copolymer represented by the following general formula (B):

General formula (B) : $Ar1^b\text{-}D^b\text{-}Ar2^b$

(In the formula, $Ar1^b$ and $Ar2^b$ are each an aromatic vinyl polymer block having a weight average molecular weight of 5000 to 20000, and $D^b$ is a conjugated diene polymer block.)

The aromatic vinyl polymer block ($Ar1^b$) and the aromatic vinyl polymer block ($Ar2^b$) are each a polymer block composed of aromatic vinyl monomer unit obtained by polymerizing an aromatic vinyl monomer as the main repeating unit.

The aromatic vinyl monomer used for constituting the aromatic vinyl monomer unit of the aromatic vinyl polymer block ($Ar1^b$) and the aromatic vinyl polymer block ($Ar2^b$) is not particularly limited as long as it is an aromatic vinyl compound, and examples thereof include the same as those of the aromatic vinyl polymer block ($Ar1^a$) and the aromatic vinyl polymer block ($Ar2^a$) described above.

The aromatic vinyl polymer block ($Ar1^b$) and the aromatic vinyl polymer block ($Ar2^b$), as long as the aromatic vinyl monomer unit is the main repeating unit, may include another monomer unit, as the monomer constituting the monomer unit other than the aromatic vinyl monomer unit, examples thereof include the same as those of the aromatic vinyl polymer block ($Ar1^a$) and the aromatic vinyl polymer block ($Ar2^a$) described above, and the content thereof may be the same as in the aromatic vinyl polymer block described above. Further, it is preferable that each the aromatic vinyl polymer block ($Ar1^b$) and the aromatic vinyl polymer block ($Ar2^b$) is also substantially composed of only one type or two or more types of aromatic vinyl monomer units, and it is particularly preferable that these are composed of only styrene unit.

In block copolymer B, the aromatic vinyl polymer block ($Ar1^b$) and the aromatic vinyl polymer block ($Ar2^b$) both have weight average molecular weights ranging 5000 to 20000. Since the first composition of the present invention contains such a symmetrical block copolymer B, the first composition is excellent in formability, and it is possible to obtain an elastic body which has little variation in film thickness, and has small permanent elongation.

The weight average molecular weights of the aromatic vinyl polymer block ($Ar1^b$) and the aromatic vinyl polymer block ($Ar2^b$) are 5000 to 20000, more preferably 6000 to 18000, and still more preferably 7000 to 16000.

The weight average molecular weights of the aromatic vinyl polymer block ($Ar1^b$) and the aromatic vinyl polymer block ($Ar2^b$) may be equal to or different from each other as long as they fall within the above ranges, but are preferably substantially equal to each other. The weight average molecular weights of the aromatic vinyl polymer block ($Ar1^b$) and the aromatic vinyl polymer block ($Ar2^b$) are preferably substantially equal to the weight average molecular weight of the aromatic vinyl polymer block ($Ar1^a$) having a relatively small weight average molecular weight of the block copolymer A.

The conjugated diene polymer block ($D^b$) is a polymer block composed of a conjugated diene monomer unit obtained by polymerizing a conjugated diene monomer as a main repeating unit.

The conjugated diene monomer used for constituting the conjugated diene monomer unit of the conjugated diene polymer block ($D^b$) is not particularly limited as long as it is a conjugated diene compound, and examples thereof include the same as those of the conjugated diene polymer block ($D^a$) described above.

The conjugated diene polymer block ($D^b$), as long as the conjugated diene monomer unit is the main repeating unit, may include another monomer unit, as the monomer constituting the monomer unit other than the conjugated diene monomer unit, examples thereof include the same as those of the conjugated diene polymer block ($D^a$) described above, and the content thereof and vinyl bond content may be the same as in the conjugated diene polymer block described above. Further, it is preferable that the conjugated diene polymer block ($D^b$) is also substantially composed of only one type or two or more types of conjugated diene monomer units, and it is particularly preferable that it is composed of only isoprene unit.

It is preferable that the vinyl bond content of the conjugated diene polymer block ($D^b$) is substantially equal to the vinyl bond content of the conjugated diene polymer block ($D^a$) of the block copolymer A.

The weight average molecular weight of the conjugated diene polymer block ($D^b$) is preferably 40000 to 400000, more preferably 45000 to 350000, and still more preferably from 50000 to 300000.

It is preferable that the weight average molecular weight of the conjugated diene polymer block ($D^b$) is substantially equal to the weight average molecular weight of the conjugated diene polymer block ($D^a$) of the block copolymer A.

The weight average molecular weight of the block copolymer B (that is, the weight average molecular weight of the entire block copolymer B) is preferably 65000 to 800000, more preferably 70000 to 700000, and still more preferably from 75000 to 600000.

The content of the aromatic vinyl monomer unit of the block copolymer B is 20 to 30% by weight with respect to the total monomer unit constituting the block copolymer B. Since the first composition according to the present invention contains a symmetrical block copolymer B containing an aromatic vinyl monomer unit at the above content, the first composition is excellent in formability, and it is possible to obtain an elastic body which has little variation in film thickness, and has small permanent elongation.

It is preferable that the block copolymer B is obtained by a production method in which a polymer block is formed by sequentially polymerizing an aromatic vinyl monomer, a conjugated diene monomer, and then an aromatic vinyl monomer in this order. Therefore, it is preferable that the block copolymer B does not contain a residue of a coupling agent. Details of such a production method will be described later.

(Block copolymer C)

The block copolymer C is a copolymer represented by the following general formula (C):

General formula (C) :     $(Ar^c\text{-}D^c_n\text{-}X$

(In the formula, $Ar^c$ is an aromatic vinyl polymer block, $D^c$ is a conjugated diene polymer block, "n" represents an integer of 2 or more, and X is a residue of coupling agent.)

The block copolymer C has a structure in which diblock structures ($Ar^c\text{-}D^c$) of the number of "n" are bonded to each other through a residue (X) of a coupling agent. "n" in the general formula (C) represents the number of branches in the block copolymer C. The block copolymer C may be a mixture of two or more block copolymers in which diblock structure is bonded at different numbers. "n" is an integer of two or more, preferably an integer of 2 to 8, more preferably an integer of 2 to 4, and still more preferably 2. The residue (X) of the coupling agent is not particularly limited as long as it is a residue of an n-valent coupling agent (coupling agent in which valent number is "n"), but is preferably a residue of a silicon atom-containing coupling agent, and more preferably a residue of a silane halide or an alkoxysilane. Examples of the coupling agent constituting the residue of the coupling agent include those described later.

As the block copolymer C, among them, it is particularly preferred to be a mixture of a block copolymer C1 having "n" of 2, a block copolymer C2 having "n" of 3, and a block copolymer C3 having "n" of 4. The weight ratio (C1/C2/C3) of the block copolymers C1 to C3 in this case is preferably 40 to 80/30 to 10/30 to 10.

The aromatic vinyl polymer block ($Ar^c$) is a polymer block composed of an aromatic vinyl monomer unit obtained by polymerizing an aromatic vinyl monomer as a main repeating unit.

The aromatic vinyl monomer used for constituting the aromatic vinyl monomer unit of the aromatic vinyl polymer block ($Ar^c$) is not particularly limited as long as it is an aromatic vinyl compound, and examples thereof include the same as those of the aromatic vinyl polymer block ($Ar1^a$) and the aromatic vinyl polymer block ($Ar2^a$) described above.

The aromatic vinyl polymer block ($Ar^c$), as long as the aromatic vinyl monomer unit is the main repeating unit, may include another monomer unit, as the monomer constituting the monomer unit other than the aromatic vinyl monomer unit, examples thereof include the same as those of the aromatic vinyl polymer block ($Ar1^a$) and the aromatic vinyl polymer block ($Ar2^a$) described above, and the content thereof may be the same as in the aromatic vinyl polymer block described above. Further, each aromatic vinyl polymer block in the block copolymer C may be composed of the same aromatic vinyl monomer unit or may be composed of different aromatic vinyl monomer units. In addition, it is preferable that the aromatic vinyl polymer block (Ar$^c$) is also substantially composed of only one type or two or more types of aromatic vinyl monomer units, and it is particularly preferable that it is composed of only styrene unit.

The weight average molecular weight of the aromatic vinyl polymer block (Ar$^c$) is preferably 4000 to 18000, more preferably 5000 to 16000, and still more preferably from 6000 to 14000.

The weight average molecular weights of the plurality of aromatic vinyl polymer blocks (Ar$^c$) of the block copolymer C may be equal to or different from each other as long as they fall within the above ranges, but are preferably substantially equal to each other.

The conjugated diene polymer block (D$^c$) is a polymer block composed of a conjugated diene monomer unit obtained by polymerizing a conjugated diene monomer as a main repeating unit.

The conjugated diene monomer used for constituting the conjugated diene monomer unit of the conjugated diene polymer block (D$^c$) is not particularly limited as long as it is a conjugated diene compound, and examples thereof include the same as those of the conjugated diene polymer block (D$^a$) described above. Further, each conjugated diene polymer block in the block copolymer C may be composed of the same conjugated diene monomer unit or may be composed of different conjugated diene monomer units.

Further, the conjugated diene polymer block (D$^c$), as long as the conjugated diene monomer unit is the main repeating unit, may include another monomer unit, as the monomer constituting the monomer unit other than the conjugated diene monomer unit, examples thereof include the same as those of the conjugated diene polymer block (D$^a$) described above, and the content thereof and vinyl bond content may be the same as in the conjugated diene polymer block described above. Further, it is preferable that the conjugated diene polymer block (D$^c$) is also substantially composed of only one type or two or more types of conjugated diene monomer units, and it is particularly preferable that it is composed of only isoprene unit.

The weight average molecular weight of the conjugated diene polymer block (D$^c$) is preferably 20000 to 200000, more preferably 25000 to 180000, and still more preferably 30000 to 150000.

The weight average molecular weights of the conjugated diene polymer blocks (D$^c$) having a plurality of block copolymers C may be equal or different from each other, as long as it is within the above range, but is preferably substantially equal.

The weight average molecular weight of the block copolymer C (That is, the weight average molecular weight of the entire block copolymer C) is preferably 60000 to 800000, more preferably 80000 to 600000.

The content of the aromatic vinyl monomer unit of the block copolymer C is less than 20% by weight, more preferably less than 18% by weight, still more preferably less than 16% by weight, and the lower limit thereof is not particularly limited, but may be 5% by weight or more with respect to the total monomer unit constituting the block copolymer C. Since the first composition of the present invention contains a block copolymer C containing an aromatic vinyl monomer unit at the above content and also containing a residue of a coupling agent, the first composition is excellent in formability, and it is possible to obtain an elastic body which has little variation in film thickness, and has small permanent elongation.

It is preferable that the block copolymer C is obtained by a production method in which the aromatic vinyl monomer and the conjugated diene monomer are polymerized to form a diblock chain, and a diblock chain and a coupling agent are reacted to perform coupling. Thus, block copolymer C contains residues of a coupling agent. Details of such a production method will be described later.

(Block copolymer D)

The first composition according to the present invention may further contain a block copolymer D. The block copolymer D is a copolymer represented by the following general formula (D):

General formula (D) :            Ar1$^d$-D$^d$

(In the formula, Ar$^d$ is an aromatic vinyl polymer block, D$^d$ is a conjugated diene polymer block.)

The aromatic vinyl polymer block (Ar$^d$) is a polymer block composed of an aromatic vinyl monomer unit obtained by polymerizing an aromatic vinyl monomer as a main repeating unit.

The aromatic vinyl monomer used for constituting the aromatic vinyl monomer unit of the aromatic vinyl polymer block (Ar$^d$) is not particularly limited as long as it is an aromatic vinyl compound, and examples thereof include the same as those of the aromatic vinyl polymer block (Ar1$^a$) and the aromatic vinyl polymer block (Ar2$^a$) described above.

The aromatic vinyl polymer block (Ar$^d$), as long as the aromatic vinyl monomer unit is the main repeating unit, may include another monomer unit, as the monomer constituting the monomer unit other than the aromatic vinyl monomer unit, examples thereof include the same as those of the aromatic vinyl polymer block (Ar1$^a$) and the aromatic vinyl polymer block (Ar2$^a$) described above, and the content thereof may be the same as in the aromatic vinyl polymer block described above. Further, it is preferable that the aromatic vinyl polymer block (Ar$^c$) is also substantially composed of only one type or two or more types of aromatic vinyl monomer units, and it is particularly preferable that it is composed of only styrene unit.

The weight average molecular weight of the aromatic vinyl polymer block (Ar$^d$) is preferably 4000 to 18000, more preferably 5000 to 16000, and still more preferably 6000 to 14000.

It is preferable that the weight average molecular weight of the aromatic vinyl polymer block (Ar$^d$) is substantially equal to the weight average molecular weight of the aromatic vinyl polymer block (Ar$^c$) of the block copolymer C.

The conjugated diene polymer block (D$^d$) is a polymer block composed of a conjugated diene monomer unit obtained by polymerizing a conjugated diene monomer as a main repeating unit.

The conjugated diene monomer used for constituting the conjugated diene monomer unit of the conjugated diene polymer block (D$^d$) is not particularly limited as long as it is a conjugated diene compound, and examples thereof include the same as those of the conjugated diene polymer block (D$^a$) described above.

Further, the conjugated diene polymer block (D$^d$), as long as the conjugated diene monomer unit is the main repeating unit, may include another monomer unit, as the monomer constituting the monomer unit other than the conjugated diene monomer unit, examples thereof include the same as those of the conjugated diene polymer block (D$^a$) described above, and the content thereof and vinyl bond content may be the same as in the conjugated diene polymer block described above. Further, it is preferable that the conjugated diene polymer block (D$^d$) is also substantially composed of only one type or two or more types of conjugated diene monomer units, and it is particularly preferable that it is composed of only isoprene unit.

It is preferable that the vinyl bond content of the conjugated diene polymer block (D$^d$) is substantially equal to the vinyl bond content of the conjugated diene polymer block (D$^c$) of the block copolymer C.

The weight average molecular weight of the conjugated diene polymer blocks (D$^d$) is preferably 20000 to 200000, more preferably 25000 to 180000, and still more preferably 30000 to 150000.

It is preferable that the weight average molecular weight of the conjugated diene polymer block (D$^d$) is substantially equal to the weight average molecular weight of the conjugated diene polymer block (D$^c$) of the block copolymer C.

The weight average molecular weight of the block copolymer D (that is, the weight average molecular weight of the entire block copolymer D) is preferably 30000 to 200000, more preferably 40000 to 180000.

The content of the aromatic vinyl monomer unit of the block copolymer D is less than 20% by weight, preferably less than 18% by weight, still more preferably less than 16% by weight, and the lower limit thereof is not particularly limited, but may be 5% by weight or more, with respect to the total monomer unit constituting the block copolymer D. When the first composition of the present invention contains a block copolymer D containing an aromatic vinyl monomer unit at the above content, the first composition is more excellent in formability, and it is possible to obtain an elastic body which has further little variation in film thickness, and has further small permanent elongation.

The first composition of the present invention contains the block copolymers A to C described above, and optionally further contains the block copolymer D. The weight ratio (A/B/C) of block copolymers A to C in the first composition of the present invention is preferably 10 to 40/10 to 40/80 to 20, more preferably 15 to 40/15 to 40/70 to 25, and still more preferably 20 to 35/20 to 35/60 to 30.

As the content of the block copolymer D when the first composition of the present invention further contains the block copolymer D, it is preferably 1 to 20% by weight, more preferably 2 to 18% by weight, and still more preferably 3 to 16% by weight, in the first composition according to the present invention, which includes the block copolymers A to C.

The block copolymers A to D can be produced according to a conventional method, and examples of the most common production method include a method in which an aromatic vinyl monomer and a conjugated diene monomer are sequentially polymerized by an anion living polymerization method to form a polymer block, and if necessary, a coupling agent is reacted to perform coupling. In addition, a method of forming a polymer block by sequentially polymerizing an aromatic vinyl monomer, a conjugated diene monomer, and then an aromatic vinyl monomer in this order may be used. In addition, it can be produced by separately producing each polymer according to a conventional polymerization method, if necessary, blending other polymer components and the like, and then mixing them according to a conventional method such as kneading or solution mixing. Further, as will be described later, it is also possible to simultaneously produce block copolymers A and B or to simultaneously produce block copolymers C and D.

In addition, in the present invention, it is also possible to use a commercially available block copolymer, and for example, "Quintac (registered trademark)" (manufactured by Zeon Corporation), "JSR-SIS (registered trademark)" (manufactured by JSR Corporation), "Vector (registered trademark)" (manufactured by DEXCO polymers), "Asaprene (registered trademark)", "Tufprene (registered trademark)", "Tuftec (registered trademark)" (manufactured by Asahi Kasei Chemicals Corporation), "Septon (registered trademark)" (manufactured by Kuraray Co., Ltd.), "KRATON (registered trademark)" (manufactured by Clayton Corporation), and the like may be used.

The block copolymer A and the block copolymer B are preferably produced by a method in which a polymer block is formed by sequentially polymerizing an aromatic vinyl monomer, a conjugated diene monomer, and then an aromatic vinyl monomer in this order.

More particularly, the block copolymer A and the block copolymer B are preferably produced by the following production method. In other words, preferred is a production method comprising:

a first polymerization step of obtaining a solution containing an aromatic vinyl polymer block chain by polymerizing a monomer containing an aromatic vinyl monomer in a solvent in the presence of a polymerization initiator,

a second polymerization step of obtaining a solution containing a diblock chain by adding a monomer containing a conjugated diene monomer to the solution containing the aromatic vinyl polymer block chain and performing a polymerization,

a third polymerization step of obtaining a solution containing a triblock chain by adding a monomer containing an aromatic vinyl monomer to the solution containing the diblock chain and performing a polymerization,

a termination step by adding, to the solution containing the triblock chain, a polymerization terminator in an amount which becomes less than 1 molar equivalents with respect to an active terminal in the triblock chain, and a part of the active terminal is deactivated to obtain a solution containing the block copolymer B and the triblock chain, and

a fourth polymerization step of obtaining a solution containing the block copolymer A and the block copolymer B by adding a monomer containing an aromatic vinyl monomer to the solution containing the triblock chain and the block copolymer B and performing a polymerization.

In the production method above, first, monomer including an aromatic vinyl monomer as the main component is polymerized in a solvent in the presence of a polymerization initiator (first polymerization step). The polymerization initiator to be used can be organic alkali metal compounds, organic alkaline earth metal compounds, organic lanthanoid rare earth metal compounds, and the like, which are known to usually have anionic polymerization activity to aromatic vinyl monomers and conjugated diene monomers. For the organic alkali metal compounds, particularly suitably used are organic lithium compounds having one or more lithium atoms in the molecule. Specific examples thereof include organic monolithium compounds such as ethyllithium, n-propyllithium, isopropyllithium, n-butyllithium, sec-butyllithium, t-butyllithium, hexyllithium, phenyllithium, stilbenelithium, dialkylaminolithium, diphenylaminolithium, and ditrimethylsilylaminolithium; organic dilithium compounds such as methylenedilithium, tetramethylenedilithium, hexamethylenedilithium, isoprenyldilithium, and 1,4-dilithio-ethylcyclohexane; organic trilithium compounds such as 1,3,5-trilithiobenzene; and the like. Among these, organic monolithium compounds are particularly suitably used.

Examples of the organic alkaline earth metal compounds used as the polymerization initiator include n-butylmagnesium bromide, n-hexylmagnesium bromide, ethoxycalcium, calcium stearate, t-butoxystrontium, ethoxybarium, isopropoxybarium, ethylmercaptobarium, t-butoxybarium, phenoxybarium, diethylaminobarium, barium stearate, ethylbarium, and the like. Specific examples of other polymerization initiators include those which form a homogeneous system in an organic solvent to have living polymerizability, such as composite catalysts of lanthanoid rare earth metal compounds (including neodymium, samarium, gadolinium, and the like) /alkylaluminum/alkylaluminum halide/alkylaluminum hydride; metallocene catalysts containing titanium, vanadium, samarium, gadolinium, or the like. These polymerization initiators may be used alone or in combination as a mixture.

The amount of the polymerization initiator to be used may be determined according to the target molecular weight and is not particularly limited. The amount is preferably 0.01 to 20 mmol, more preferably 0.05 to 15 mmol, still more preferably 0.1 to 10 mmol with respect to 100 g of the total monomers.

The solvent used in polymerization can be any solvent inactive to the polymerization initiator. For example, a linear hydrocarbon solvent, a cyclic hydrocarbon solvent, or a mixed solvent thereof is used. Examples of the linear hydrocarbon solvent include linear alkanes and alkenes having 4 to 6 carbon atoms such as n-butane, isobutane, 1-butene, isobutylene, trans-2-butene, cis-2-butene, 1-pentene, trans-2-pentene, cis-2-pentene, n-pentane, isopentane, neopentane, and n-hexane. Specific examples of the cyclic hydrocarbon solvent include aromatic compounds such as benzene, toluene, and xylene; alicyclic hydrocarbon compounds such as cyclopentane and cyclohexane. These solvents may be used alone or in combination as a mixture.

Although not particularly limited, the amount of the solvent used in polymerization is preferably set such that the content of the block copolymer in the finally obtained block copolymer solution falls within the range of preferably 5 to 60% by weight, more preferably 10 to 55% by weight, particularly preferably 20 to 50% by weight.

A Lewis base compound may be added to a reactor used in polymerization to control the structures of the polymer blocks. Examples of the Lewis base compound include ethers such as tetrahydrofuran, diethyl ether, dioxane, ethylene glycol dimethyl ether, ethylene glycol dibutyl ether, diethylene glycol dimethyl ether, and diethylene glycol dibutyl ether; tertiary amines such as tetramethylethylenediamine, trimethylamine, triethylamine, pyridine, and quinuclidine; alkali metal alkoxides such as potassium t-amyloxide and potassium t-butyloxide; phosphines such as triphenylphosphine; and the like. These Lewis base compounds may be used alone or in combination, and are appropriately selected in the range not impairing the object of the present invention.

The Lewis base compound can be added to the polymerization reaction at any timing, which may be appropriately determined according to the structures of the block copolymers. For example, the Lewis base compounds may be preliminarily added before polymerization is started, or may be added after the polymer blocks are partially polymerized. Furthermore, the Lewis base compound may be preliminarily added before polymerization is started, and may be further added after the polymer blocks are partially polymerized.

The temperature for the polymerization reaction is preferably 10 to 150°C, more preferably 30 to 130°C, still more preferably 40 to 90°C. Although the time needed for polymerization varies according to the condition, the time is usually within 48 hours, preferably 0.5 to 10 hours. The polymerization pressure is not particularly limited, and polymerization may be performed at a pressure enough to maintain the monomer and the solvent in liquid phases at a polymerization temperature in the above range.

A solution containing aromatic vinyl polymer block chains can be prepared by polymerizing monomer including an aromatic vinyl monomer as the main component in the presence of the polymerization initiator under the condition described above. The aromatic vinyl polymer block chain produced through polymerization usually has active terminal. The resulting aromatic vinyl polymer block chain will form the aromatic vinyl polymer block (Ar1$^a$) or the aromatic vinyl polymer block (Ar1$^b$). For this reason, the amount of the monomer used in the first polymerization step may be determined according to the weight average molecular weight of the aromatic vinyl polymer block (Ar1$^a$) or the aromatic vinyl polymer block (Ar1$^b$).

In the next step, monomer including a conjugated diene monomer as the main component is added to the solution containing aromatic vinyl polymer block chain prepared in the first polymerization step to perform polymerization (second polymerization step). Thereby, a solution containing diblock chain can be prepared. The diblock chain produced through polymerization usually has active terminal. In the diblock chain produced through the second polymerization step, the polymer chain produced through the first polymerization step which will form the aromatic vinyl polymer block (Ar1$^a$) or the aromatic vinyl polymer block (Ar1$^b$) is bonded to the polymer chain which will form the conjugated diene polymer block (D$^a$) or the conjugated diene polymer block (D$^b$). For this reason, the amount of the monomer used in the second polymerization step may be determined according to the weight average molecular weight of the conjugated diene polymer block (D$^a$) or the conjugated diene polymer block (D$^b$). The temperature for the polymerization reaction, the polymerization time, and the polymerization pressure may be controlled within the same ranges as those in the first polymerization step.

In the next step, monomer including an aromatic vinyl monomer as the main component is added to the solution containing diblock chain prepared in the second polymerization step to perform polymerization (third polymerization step). Thus, a solution containing a triblock chain can be obtained. Note that the triblock chain obtained by polymerization is usually one having an active terminal. Further, in the triblock chain produced in the third polymerization step, the polymer chain produced in the second polymerization step which will form the aromatic vinyl polymer block (Ar1$^a$) or the aromatic vinyl polymer block (Ar1$^b$) and the conjugated diene polymer block (D$^a$) or the conjugated diene polymer block (D$^d$) is further bonded to the polymer chain which will form a part of the aromatic vinyl polymer block (Ar2$^a$) or the aromatic vinyl polymer block (Ar2$^b$). For this reason, the amount of the monomer used in the step 1 of the third polymerization step may be determined according to the weight average molecular weight of the aromatic vinyl polymer block (Ar2$^b$). The temperature for the polymerization reaction, the polymerization time, and the polymerization pressure may be controlled within the same ranges as those in the first polymerization step.

Then, a polymerization terminator is added to the solution containing the triblock chain obtained in the third polymerization step in an amount which becomes less than 1 molar equivalents with respect to the active terminal in the triblock chain (termination step). Thus, a part of the active terminal in the triblock chain is deactivated to obtain a block copolymer in which the active terminal is deactivated. This block copolymer is a block copolymer B represented by the general formula (B) : Ar1$^b$-D$^b$-Ar2$^b$.

The polymerization terminator is not particularly limited as long as it can react with the active terminal to deactivate the active terminal and does not react with another active terminal after reacting with the one active terminal, but is preferably a polymerization terminator which is a compound which does not contain a halogen atom from the viewpoint of suppressing moisture absorption of the obtained copolymer, and among them, a polymerization terminator which generates a metal alkoxide, a metal aryl oxide, or a metal hydroxide when reacted with the active terminal is particularly preferred. Examples of the compound particularly preferably used as the polymerization terminator include water, a mono-valent alcohol such as methanol and ethanol, and a mono-valent phenols such as phenol and cresol.

The amount of the polymerization terminator to be used is determined according to the weight ratio of the block copolymer A and the block copolymer B which constitute the first composition and is not particularly limited as long as it is an amount which becomes less than 1 molar equivalents with respect to the active terminal in the triblock chain, but is usually preferably in a range in which the polymerization terminator becomes 0.18 to 0.91 molar equivalents with respect to the active terminal and is in a range of 0.35 to 0.80 molar equivalents.

As described above, when a polymerization terminator is added to the solution containing the triblock chain having the active terminal in an amount of less than 1 molar equivalents with respect to the active terminal thereof, a part of the triblock chains having the active terminals is deactivated and a polymer in which its active terminal has been deactivated becomes a block copolymer B. Then, the remaining portion of the triblock chains having an active terminal which has not reacted with the polymerization terminator remains unreacted in the solution.

Then, a monomer containing an aromatic vinyl monomer as a main component is added to the solution containing the triblock chain and the block copolymer B obtained in the termination step and polymerization is performed (the fourth polymerization step). As a result, it is possible to obtain a solution containing the block copolymer A represented by the general formula (A) : $Ar1^a$-$D^a$-$Ar2^a$ and the block copolymer B. The block copolymer A produced in the fourth polymerization step is one in which a polymer chain which forms a part of an aromatic vinyl polymer block ($Ar2^a$) is further bonded to the active terminal of the triblock chain obtained in the third polymerization step. For this reason, the amount of the monomer used in the fourth polymerization step may be determined according to the weight average molecular weight of the aromatic vinyl polymer block ($Ar2^a$). The temperature for the polymerization reaction, the polymerization time, and the polymerization pressure may be controlled within the same ranges as those in the first polymerization step.

After the fourth polymerization step, the polymer component may be recovered from the solution containing the block copolymer A and the block copolymer B (recovery step). The method of recovery may be according to a conventional method, and is not particularly limited. For example, after completion of the reaction, if necessary, a polymerization terminator such as water, methanol, ethanol, propanol, hydrochloric acid, or citric acid is added, and if necessary, an additive such as an antioxidant is further added, and then a known method such as a drying method or a steam stripping is applied directly to the solution to be recovered. When the polymer component is recovered as a slurry by applying steam stripping or the like, the polymer component may be dehydrated using an optional dehydrator such as an extruder type squeezer to obtain a crumb having a moisture content of a predetermined value or less, and the crumb may be dried using an optional dryer such as a band dryer and an expansion extruder. The block copolymer obtained as described above may be processed into a pellet shape or the like according to a conventional method and then used.

As described above, the block copolymer A and the block copolymer B can be produced.

It is preferable that the block copolymer C is produced by a method in which an aromatic vinyl monomer and a conjugated diene monomer are polymerized to form a diblock chain, and a diblock chain and a coupling agent are reacted to perform coupling.

More particularly, the block copolymer C is preferably produced by the following production method. That is a production method comprising,

a first polymerization step of obtaining a solution containing an aromatic vinyl polymer block chain by polymerizing a monomer containing an aromatic vinyl monomer in a solvent in the presence of a polymerization initiator,

a second polymerization step of obtaining a solution containing a diblock chain by adding a monomer containing a conjugated diene monomer to the solution containing the aromatic vinyl polymer block chain and performing a polymerization,

a reaction step of adding a coupling agent to the solution containing the diblock chain to obtain a block copolymer C.

In the above production method, first, a monomer containing an aromatic vinyl monomer as a main component is polymerized using a polymerization initiator in a solvent (first polymerization step). The solvent used in the first polymerization step and the amount thereof used, the polymerization initiator and the amount thereof used may be the same as those of the first polymerization step in the above-described preferred production method of the block copolymer A and the block copolymer B. In addition, a Lewis base compound may be added in the same manner as in the first polymerization step in the above-described preferred production method of the block copolymer A and the block copolymer B. Further, the same polymerization reaction temperature, polymerization time and polymerization pressure as those of the first polymerization step in the above-described preferred production method of the block copolymer A and the block copolymer B may be employed.

Under the above conditions, a solution containing an aromatic vinyl polymer block chain can be obtained by polymerizing the monomer containing the aromatic vinyl monomer as the main component using the polymerization initiator in the solvent. Note that, the aromatic vinyl polymer block chain obtained by polymerization is usually one having an active terminal. The obtained aromatic vinyl polymer block chain become to form the aromatic vinyl polymer block ($Ar^c$). For this reason, the amount of the monomer used in this first polymerization step may be determined according to the weight average molecular weight of the aromatic vinyl polymer block ($Ar^c$) .

Then, a monomer containing a conjugated diene monomer as a main component is added to the solution containing the aromatic vinyl polymer block chain obtained in the first polymerization step, and polymerization is performed (second polymerization step). Thus, a solution containing a diblock chain can be obtained. Note that, the diblock chain obtained by polymerization is usually one having an active terminal. In addition, in the diblock chain produced through the second polymerization step, the polymer chain produced through the first polymerization step which will form the aromatic vinyl polymer block ($Ar^c$) is bonded to the polymer chain which will form the conjugated diene polymer block ($D^c$). For this reason, the amount of the monomer used in the second polymerization step may be determined according to the weight average molecular weight of the conjugated diene polymer block ($D^c$). The temperature for the polymerization reaction, the polymerization time, and the polymerization pressure may be controlled within the same ranges as those in the first polymerization step.

Then, to the solution containing diblock chain, a coupling agent is added (reaction step). Thus, the active terminal in the diblock chain and the coupling agent react with each other, so that two or more diblock chains are bonded via residues of the coupling agent to form the block copolymer C.

The coupling agent is not particularly limited as long as it has two or more functional groups in one molecule capable of reacting with the active terminal in the diblock chain, but a coupling agent having 2 to 8 functional groups in one molecule capable of reacting with the active terminal in the diblock chain is preferred, a coupling agent having 2 to 4 functional groups in one molecule capable of reacting with the active terminal in the diblock chain is more preferred. Further, the coupling agent preferably contains a silicon atom, and more preferably a silane halide and an alkoxysilane.

As a coupling agent having two functional groups in one molecule capable of reacting with the active terminal of the diblock chain (two functional coupling agent), for example, two functional halogenated silanes such as dichlorosilane, monomethyldichlorosilane, and dimethyldichlorosilane; two functional alkoxysilanes such as diphenyldimethoxysilane, and diphenyldiethoxysilane; two functional halogenated alkanes such as dibromoethane, methylene chloride, and dibromomethane; two functional tin halides such as dichlorotin, monomethyldichlorotin, dimethyldichlorotin, monoethyldichlorotin, monobutyldichlorotin, and dibutyldichlorotin; dibromobenzene, benzoic acid, CO, 2-chloropropene, and the like may be used. Among these, two functional silane halides or two functional alkoxysilanes is particularly preferably used. As the two functional coupling agents, one kind may be used alone, or two or more kinds may be used in combination.

As a coupling agent having three functional groups in one molecule capable of reacting with the active terminal of the diblock chain (three functional coupling agent), for example, three functional halogenated alkanes such as trichloroethane, and trichloropropane; three functional halogenated silanes such methyltrichlorosilane, and ethyltrichlorosilane; three functional alkoxysilanes such as methyltrimethoxysilane, phenyltrimethoxysilane, and phenyltriethoxysilane; and the like may be mentioned. As the three functional coupling agents, one kind may be used alone, or two or more kinds may be used in combination.

As a coupling agent having four functional groups in one molecule capable of reacting with the active terminal of the diblock chain (four functional coupling agent), for example, four functional halogenated alkanes such as carbon tetrachloride, carbon tetrabromide, and tetrachloroethane; four functional halogenated silanes such as tetrachlorosilane, and tetrabromosilane; four functional alkoxysilanes such as tetramethoxysilane, and tetraethoxysilane; four functional tin halides such as tetrachlorotin, and tetrabromotin; and the like may be mentioned. As the four functional coupling agents, one kind may be used alone, or two or more kinds may be used in combination.

The number of "n" of the block copolymer C, that is, the number of branches of the block copolymer C, can be controlled by adjusting the type of the coupling agent, the amount thereof used, the timing of the addition thereof, the amount of the Lewis base compound used, and the like. Also, a reaction terminator such as methanol can be used to adjust the coupling ratio to adjust the number of branches of the block copolymer C. Further, by using two or more kinds of coupling agents having different numbers of functional groups capable of reacting with the active terminal in the diblock chain in combination, it is also possible to adjust the number of branches of the block copolymer C. Further, by these means, the diblock chain produced in the second polymerization step may be left unreacted and finally recovered as the block copolymer D.

The amount of the coupling agent to be used is adjusted to an appropriate amount according to the number of branches of the target block copolymer C. The amount of the coupling agent to be used is preferably 0.05 to 0.9 molar equivalents, more preferably 0.20 to 0.70 molar equivalents, with respect to the active terminal in the diblock chain.

The reaction temperature is preferably 10 to 150°C, more preferably 30 to 130°C, and still more preferably from 40 to 90°C. The time required for the reaction varies depending on the conditions, but is usually within 48 hours, preferably 0.5 to 10 hours.

After the reaction step, the polymer component may be recovered from the solution containing the block copolymer C and the block copolymer D (recovery step). The method of recovery may be according to a conventional method, and is not particularly limited. For example, after completion of the reaction, if necessary, a polymerization terminator such as water, methanol, ethanol, propanol, hydrochloric acid, or citric acid is added, and if necessary, an additive such as an antioxidant is further added, and then a known method such as a direct drying method or a steam stripping is applied directly to the solution to be recovered. When the polymer component is recovered as a slurry by applying steam stripping or the like, the polymer component may be dehydrated using an optional dehydrator such as an extruder type squeezer to obtain a crumb having a moisture content of a predetermined value or less, and the crumb may be dried using an optional dryer such as a band dryer and an expansion extruder. The block copolymer obtained as described above may be processed into a pellet shape or the like according to a conventional method and then used.

As described above, the block copolymer C and optionally the block copolymer D can be produced.

The first composition of the present invention may contain, in addition to the block copolymers A to C, a polyolefin-based thermoplastic resin. From the first composition containing block copolymers A to C and the polyolefin-based thermoplastic, a stretchable film can be easily obtained. Further, a stretchable laminate may be obtained by laminating the obtained stretchable film and the nonwoven fabric, and in this case, the stretchable film and the nonwoven fabric are firmly bonded. The stretchable laminate can be produced, for example, by extruding the composition onto a nonwoven fabric by extrusion. The polyolefin-based thermoplastic resin used in the present invention is not particularly limited as long as it is a resin having thermoplasticity containing an olefin as a main repeating unit, and may be any of a homopolymer of α-olefin, a copolymer of two or more α-olefin, and a copolymer of α-olefin and a monomer other than α-olefin, and may be a polymer obtained by modifying these (co)polymers.

Specific examples of the polyolefin-based thermoplastic resin include homopolymers or copolymers of α-olefin such as ethylene and propylene. For example, homopolymers of α-olefin such as polyethylene such as linear low-density polyethylene (LLDPE), low-density polyethylene (LDPE), medium-density polyethylene (MDPE), and high-density polyethylene (HDPE), and metallocene polyethylene, polypropylene, metallocene polypropylene, polymethylpentene, polybutene; copolymers of ethylene with other α-olefin, such as ethylene-propylene random copolymers, ethylene-propylene block copolymers, and ethylene-buten-1 copolymers,ethylene-propylene-butene-1 copolymer and ethylene-cycloolefin copolymer; copolymers of α-olefins with carboxylic unsaturated alcohols which mainly contain α-olefins and saponified products thereof such as ethylene-vinyl acetate copolymer, ethylene-vinyl alcohol copolymer; copolymers of α-olefin and α,β-unsaturated carboxylic acid ester or α,β-unsaturated carboxylic acid and the like which contain α-olefins such as ethylene-α,β-unsaturated carboxylic acid ester copolymer (ethylene-ethyl acrylate copolymer, ethylene-ethyl methacrylate copolymer, and the like), ethylene-α,β-unsaturated carboxylic acid copolymer (ethylene-acrylic acid copolymer, ethylene-methacrylic acid copolymer, and the like); acid-modified olefin resins such as α-olefin (co)polymers such as polyethylene and polypropylene which is modified by unsaturated carboxylic acids and/or anhydrides thereof such as acrylic acid, methacrylic acid, maleic acid, maleic anhydride, fumaric acid, and itaconic acid; ionomer resins in which Na ion, Zn ion, and the like are brought into action on copolymers of ethylene and methacrylic acid; and mixtures thereof; may be mentioned. Among these, a copolymer of polyethylene or ethylene and other α-olefin is preferred, and among them, a copolymer of polyethylene or ethylene and another α-olefin which is produced using a metallocene catalyst is particularly preferred.

The weight average molecular weight of the polyolefin-based thermoplastic resin is not particularly limited, but is usually selected in the range of 10000 to 5000000, and is preferably selected in the range of 50000 to 800000. The specific gravity and the melt index of the polyolefin-based thermoplastic resin are not particularly limited, but the specific gravity is usually selected in the range of 0.80 to 0.95 g/cm$^3$, preferably in the range of 0.85 to 0.94 g/cm$^3$, and the melt index is usually selected in the range of 1 to 1000 g/10 min, preferably in the range of 3 to 500 g/10 min, as values measured in accordance with ASTM D-1238 (G condition, 200°C, 5 Kg).

The content of the polyolefin-based thermoplastic resin is preferably 3 to 50 parts by weight, more preferably 5 to 40 parts by weight, and still more preferably 8 to 30 parts by weight, with respect to 100 parts by weight of the total of the block copolymers A to C. Note that, as the polyolefin-based thermoplastic resin, one kind may be used alone, or two or more kinds may be used in combination.

The first composition of the present invention may further contain, if necessary, a fatty acid amide, a polyethylene wax, an antioxidant, a tackifying resin, a softening agent, an antibacterial agent, a light stabilizer, an ultraviolet absorber, a dye, a lubricant, and the like.

The fatty acid amide may be an aliphatic monoamide or an aliphatic bisamide. The aliphatic monoamide is not particularly limited as long as it is a compound obtained by bonding a hydrocarbon group and a one amide group (-NHCO), but a monoamide of a higher saturated fatty acid having 12 or more carbon atoms (that is, a compound obtained by bonding a chain alkyl group having 12 or more carbon atoms and a one amide group (-NHCO)) is preferably used.

Specific examples of fatty acid monoamides include saturated fatty acid monoamides such as lauric amide, myristic amide, palmitic amide, stearic amide, behenic amide, hydroxystearic amide, and the like; unsaturated fatty acid monoamide such as oleic amide, erucic amide, and the like.

The content of the fatty acid amide is preferably 0.2 to 10 parts by weight, more preferably 0.3 to 8 parts by weight, and still more preferably from 0.5 to 6 parts by weight, with respect to 100 parts by weight of the total of the block copolymers A to C.

The polyethylene wax is a wax having an ethylene monomer unit as a main constitutional unit. The polyethylene wax used in the present invention is not particularly limited, but is preferably used having a viscosity of 20 to 6000 mPa·s at 140°C.

The polyethylene waxes are generally produced by polymerization of ethylene or decomposition of polyethylene, but in the present invention, either polyethylene wax may be used. In addition, polyethylene wax is available in commercially available products, and specific examples thereof include "A-C polyethylene" (manufactured by Honeywell), "Mitsui High Wax" (manufactured by Mitsui Chemical Incorporatied), "Sanwax" (manufactured by Sanyo Chemical Industries, Ltd.), and "epolene" (manufactured by Eastman Chemical Company).

The antioxidant is not particularly limited, and for example, hindered phenolic compounds such as pentaerythritol tetrakis[3-(3,5-di-t-butyl-4-hydroxyphenyl)propionate], octadecyl-3-(3,5-di-t-butyl-4-hydroxyphenyl)propionate, 2,6-di-t-butyl-p-cresol, di-t-butyl-4-methylphenol; thiodicarboxylate esters such as dilauryl thiopropionate; phosphites such as tris(nonylphenyl)phosphite; may be used.

The content of the antioxidant is preferably 10 parts by weight or less, more preferably 0.05 to 5 parts by weight, with respect to 100 parts by weight of the total of the block copolymers A to C.

It is preferred that the first composition of the present invention further contains a wax containing a linear hydrocarbon and a branched hydrocarbon. By containing the wax containing the linear hydrocarbon and the branched hydrocarbon, the first composition of the present invention is excellent in formability, and in addition to obtaining an elastic body having little variation in film thickness and small permanent elongation, an elastic body excellent in hue and low odor resistance and excellent in ozone crack resistance can be obtained.

The wax used in the present invention may be a natural wax or a synthetic wax, but is preferably a natural wax, and more preferably a petroleum wax.

A blended wax in which petroleum wax is mainly contained and other natural waxes and synthetic waxes are partially mixed therein may be used. Further, for the purpose of improving the function and workability of these waxes, a small amount of resin or the like may be further blended into the wax. Further, although the first composition of the present invention may contain other waxes other than the wax containing the linear hydrocarbon and the branched chain hydrocarbon, it is preferable not to contain other waxes from the viewpoint of obtaining an elastic body excellent in hue and low odor property and excellent in ozone crack resistance.

The linear hydrocarbon is preferably a linear aliphatic saturated hydrocarbon. The linear hydrocarbon is sometimes referred to as normal paraffin. The branched hydrocarbon is preferably a branched aliphatic saturated hydrocarbon. The branched hydrocarbon is sometimes called isoparaffin. As the linear hydrocarbon and the branched hydrocarbon, a linear hydrocarbon and a branched hydrocarbon contained in a petroleum wax are preferred.

In addition to the linear hydrocarbon and the branched hydrocarbon, a cyclic hydrocarbon may be contained in the wax used in the present invention, but the total amount of the linear hydrocarbon and the branched hydrocarbon in the wax is preferably 50% by mass or more, more preferably 70% by mass or more, still more preferably 80% by mass or more, and most preferably 90% by mass or more.

As the weight ratio (n-structure/iso-structure) of the linear hydrocarbon (n-structure) and the branched hydrocarbon (iso-structure) in the wax, it is 30/70 to 99/1, preferably 50/50 to 97/3, more preferably 70/30 to 95/5, and most preferably 75/25 to 90/10. When the weight ratio (n-structure/iso-structure) falls within the above ranges, an elastic body having excellent ozone crack resistance can be obtained.

The melting point of the wax is less than 80°C, preferably less than or equal to 76°C, more preferably less than or equal to 73°C, preferably greater than or equal to 30°C, more preferably greater than or equal to 40°C, and still more preferably greater than or equal to 45°C. The melting point of the wax can be measured by using a differential scanning calorimeter or the like. If the melting point of the wax is too high, it becomes difficult to obtain an elastic body having excellent ozone crack resistance. If the melting point of the wax is too low, it is easy to block during transportation and storage, and it is easy to melt during processing, resulting in poor handling properties.

The content of the wax in the first composition of the present invention is preferably 0.1 to 5 parts by weight, more preferably 0.3 to 3.5 parts by weight, and still more preferably 0.5 to 2 parts by weight, with respect to 100 parts by weight of the total of the block copolymers in the composition. If the content of the wax is too large, it may be difficult to obtain an elastic body having a small permanent elongation, and if the content of the wax is too small, it may be difficult to obtain an elastic body having excellent ozone crack resistance. The weight of the block copolymer in the composition is, for example, the weight of the sum of block copolymers A to C when the first composition according to the present invention contains block copolymers A to C, and the weight of the sum of block copolymers A to D when the first composition according to the present invention contains block copolymers A to D.

In obtaining the first composition according to the present invention, a method of mixing the block copolymers A to C with other components is not particularly limited. For example, a method in which each component is dissolved in a solvent and uniformly mixed, and then the solvent is removed by heating or the like, and a method in which each component is melt-mixed by a screw extruder, a kneader, or the like may be mentioned. Of these, melt mixing is suitable from the viewpoint of more efficiently performing mixing. Note that, the temperature at the time of performing melt mixing is not particularly limited, but is usually in the range of 100 to 250°C.

When the block copolymers A to C and other components are melt-mixed, it is preferable that all or a part of the components of one or more of the block copolymers A to C and other components are kneaded in advance by a single screw extruder, a twin screw extruder, a Banbury mixer, or the like to prepare a master batch pellet in order to more uniformly mix the other components and the block copolymers A to C. Among the above, it is preferable to use a twin screw extruder in particular in view of kneadability, cleaning property, and cost.

When the elasticity body is produced, the block copolymers A to C are supplied, and at the same time, the master batch pellet described above is supplied and uniformly mixed, so that an elastic body where the other components are highly uniformly dispersed in the block copolymers A to C can be obtained with high productivity.

As the components of one or more of the block copolymers A to C used for producing the masterbatch pellet, the amount only needs to be allocated to the production of the masterbatch pellet, and the composition ratio of the block copolymers A to C described above can be obtained by adjusting the supply amount of the block copolymers A to C and the supply amount of the masterbatch pellet in producing the elastic body.

The second composition according to the present invention contains a block copolymer having at least one aromatic vinyl polymer block and at least one conjugated diene polymer block, and a wax.

(Block copolymer)

The block copolymer used in the second composition according to the present invention has at least one aromatic vinyl polymer block and at least one conjugated diene polymer block. The aromatic vinyl polymer block contains an aromatic vinyl monomer unit formed by an aromatic vinyl monomer, and the conjugated diene polymer block contains a conjugated diene monomer unit formed by a conjugated diene monomer.

The aromatic vinyl monomer forming the aromatic vinyl monomer unit is not particularly limited as long as it is an aromatic vinyl compound. Examples of usable aromatic vinyl monomers include styrene, $\alpha$-methylstyrene, 2-methylstyrene, 3-methylstyrene, 4-methylstyrene, 2-ethylstyrene, 3-ethylstyrene, 4-ethylstyrene, 2,4-diisopropylstyrene, 2,4-dimethylstyrene, 4-t-butylstyrene, 5-t-butyl-2-methylstyrene, 2-chlorostyrene, 3-chlorostyrene, 4-chlorostyrene, 4-bromostyrene, 2-methyl-4,6-dichlorostyrene, 2,4-dibromostyrene, vinylnaphthalene, and the like. Among these, use of styrene is preferred. These aromatic vinyl monomers can be used alone or in combination. In addition, when the block copolymer has a plurality of aromatic vinyl polymer blocks, each aromatic vinyl polymer block may be composed of the same aromatic vinyl monomer unit or may be composed of different aromatic vinyl monomer units.

The aromatic vinyl polymer block may contain another monomer unit as long as the aromatic vinyl monomer unit is the main repeating unit. Examples of monomers which form monomer unit other than the aromatic vinyl monomer unit contained in the aromatic vinyl polymer block include conjugated diene monomers such as 1,3-butadiene and isoprene (2-methyl-1,3-butadiene), $\alpha,\beta$-unsaturated nitrile monomers, unsaturated carboxylic acid monomers or acid anhydride monomers, unsaturated carboxylic acid ester monomers, non-conjugated diene monomers, and the like. The content of the monomer unit other than the aromatic vinyl monomer unit in the aromatic vinyl polymer block is preferably 20% by weight or less, more preferably 10% by weight or less, particularly preferably substantially 0% by weight.

The conjugated diene monomer forming the conjugated diene monomer unit is not particularly limited as long as it is a conjugated diene compound. Examples thereof include 1,3-butadiene, isoprene, 2,3-dimethyl-1,3-butadiene, 2-chloro-1,3-butadiene, 1,3-pentadiene, 1,3-hexadiene, and the like. Among these, preferred is use of 1,3-butadiene and/or isoprene, and particularly preferred is use of isoprene. These conjugated diene monomers can be used alone or in combination. In addition, when the block copolymer has a plurality of conjugated diene polymer blocks, each conjugated diene polymer block may be composed of the same conjugated diene monomer unit or may be composed of different conjugated diene monomer units. Further, a hydrogenation reaction may be performed on a portion of the unsaturated bond of the conjugated diene polymer block.

The conjugated diene block may contain another monomer unit as long as the conjugated diene monomer unit is the main repeating unit. Examples of monomers which form monomer unit other than the conjugated diene monomer unit contained in the conjugated diene block include aromatic vinyl monomers such as styrene and $\alpha$-methylstyrene, $\alpha,\beta$-unsaturated nitrile monomers, unsaturated carboxylic acid monomers or acid anhydride monomers, unsaturated carboxylic acid ester monomers, non-conjugated diene monomers, and the like. The content of the monomer unit other than the conjugated diene monomer unit in the conjugated diene block is preferably 20% by weight or less, more preferably 10% by weight or less, particularly preferably substantially 0% by weight.

The vinyl bond content (the ratio of the 1,2-vinyl bond unit and the 3,4-vinyl bond unit with respect to the total conjugated diene monomer unit in the conjugated diene polymer block) of the conjugated diene polymer block is not particularly limited, but is preferably in the range of 1 to 20 mol%, more preferably in the range of 2 to 15 mol%, and particularly preferably in the range of 3 to 10 mol%.

As long as the block copolymer used in the second composition according to the present invention is composed of at least one of the aromatic vinyl polymer block and at least one of the conjugated diene polymer block, the number of the respective polymer blocks and the bonding form thereof are not particularly limited. Specific examples of the form of the block copolymer used in the second composition according to the present invention include, but are not limited to, an aromatic vinyl-conjugated diene block copolymer represented by Ar-D, an aromatic vinyl-conjugated diene-aromatic vinyl block copolymer represented by Ar-D-Ar or (Ar-D)n-X, a conjugated diene-aromatic vinyl-conjugated diene block copolymer represented by D-Ar-D or (D-Ar)n-X, an aromatic vinyl-conjugated diene-aromatic vinyl-conjugated diene block copolymer represented by Ar-D-Ar-D, and mixtures of two or more of these block copolymers in any combination, where Ar represents an aromatic vinyl polymer block, D represents a conjugated diene polymer block, X represents a coupling agent residue, and "n" represents an integer of 2 or more. In the second composition according to the present invention, as the block copolymer particularly preferably used, a block copolymer selected from an aromatic vinyl-conjugated diene block copolymer represented by Ar-D, and an aromatic vinyl-conjugated diene-aromatic vinyl block copolymer represented by Ar-D-Ar or (Ar-D)n-X, and mixtures thereof may be mentioned.

In addition, in the aromatic vinyl-conjugated diene-aromatic vinyl block copolymer represented by Ar-D-Ar or (Ar-D)n-X, the molecular chain lengths of the respective aromatic vinyl blocks (Ar) may be the same or those having different molecular chain lengths may be included.

The weight average molecular weight of the block copolymer used in the second composition according to the present invention is not particularly limited, but is usually selected in the range of 40,000 to 500,000, and is preferably selected in the range of 50,000 to 400,000.

The content of the aromatic vinyl monomer unit in the block copolymer used in the second composition according to the present invention is not particularly limited, but is preferably in the range of 5 to 60% by mass, more preferably in the range of 7 to 55% by mass, and still more preferably in the range of 10 to 50% by mass. Incidentally, if the block copolymer is substantially composed of only an aromatic vinyl monomer unit and a conjugated diene monomer unit, according to the method described in Rubber Chem. Technol., 45, 1295 (1972), by ozonolyzing the block copolymer then reducing the ozonolyzed product using lithium aluminum hydride, the conjugated diene monomer unit portion is decomposed and the aromatic monovinyl monomer unit portion can be taken out, so that the aromatic vinyl monomer unit content can be measured by such a method.

As described above, the block copolymer comprising the aromatic vinyl polymer block and the conjugated diene polymer block can be produced according to a conventional method, and as the most general production method, a method in which the aromatic vinyl monomer and the conjugated diene monomer are each sequentially polymerized by an anion living polymerization method to form a polymer block, and if necessary, the coupling agent is reacted to perform coupling can be mentioned. In addition, a method of forming a polymer block by sequentially polymerizing the aromatic vinyl monomer, the conjugated diene monomer, and then the aromatic vinyl monomer in this order may be used.

It is also possible to use a commercially available block copolymer as a block copolymer used in the second composition according to the present invention, and for example, "Quintac (registered trademark)" (manufactured by Zeon Corporation), "JSR-SIS (registered trademark)" (manufactured by JSR Corporation), "Vector (registered trademark)" (manufactured by DEXCO polymers), "Asaprene (registered trademark)", "Tufprene (registered trademark)", "Tuftec (registered trademark)" (manufactured by Asahi Kasei Chemicals Corporation), "Septon (registered trademark)" (manufactured by Kuraray Co., Ltd.), and the like may be used.

As the block copolymer used in the second composition according to the present invention, a composition containing the block copolymers A to D described above as the first composition according to the present invention is particularly preferred. By containing a composition containing block copolymers A to D as the block copolymer, the second composition according to the present invention is excellent in formability, and it is possible to obtain an elastic body which has little variation in film thickness, and has small permanent elongation, in addition to being excellent in hue and low odor property, and obtaining an elastic body excellent in ozone crack resistance.

(Wax)

The wax used in the second composition according to the present invention contains a linear hydrocarbon and a branched hydrocarbon. By containing the wax containing the linear hydrocarbon and the branched hydrocarbon, the second composition according to the present invention is excellent in hue and low odor property, and an elastic body excellent in ozone crack resistance can be obtained.

As the wax used in the second composition according to the present invention, those described in detail as the wax used for the first composition of the present invention can be used.

The content of the wax in the second composition of the present invention is preferably 0.1 to 5 parts by weight, more preferably 0.3 to 3.5 parts by weight, and still more preferably 0.5 to 2 parts by weight, with respect to 100 parts by weight of the block copolymer. If the content of the wax is too large, it may be difficult to obtain an elastic body having a small permanent elongation, and if the content of the wax is too small, it may be difficult to obtain an elastic body having excellent ozone crack resistance.

In obtaining the second composition according to the present invention, a method of mixing the block copolymer with other components such as wax is not particularly limited. For example, a method in which each component is dissolved in a solvent and uniformly mixed, and then the solvent is removed by heating or the like, and a method in which each component is melt-mixed by a screw extruder, a kneader, or the like may be mentioned. Of these, melt mixing is suitable from the viewpoint of more efficiently performing mixing. Note that, the temperature at the time of performing melt mixing is not particularly limited, but is usually in the range of 100 to 250°C.

When the block copolymer and other components are melt-mixed, it is preferable that a part of the block copolymer and other components are kneaded in advance by a single screw extruder, a twin screw extruder, a Banbury mixer, or the like to prepare a master batch pellet in order to more uniformly mix the other components and the block copolymer. Among the above, it is preferable to use a twin screw extruder in particular in view of kneadability, cleaning property, and cost.

When the elasticity body is produced, the block copolymer is supplied, and at the same time, the master batch pellet described above is supplied and uniformly mixed, so that an elastic body where the other components are highly uniformly dispersed in the block copolymer can be obtained with high productivity.

The second composition according to the present invention may further contain the above-described polyolefin-based thermoplastic resin. Further, the second composition according to the present invention may contain, if necessary, a fatty acid amide, an antioxidant, a tackifying resin, a softening agent, an antibacterial agent, a light stabilizer, an ultraviolet absorber, a dye, a lubricant, and the like.

The first composition according to the present invention is excellent in formability, and the elastic body having little variation in film thickness and small permanent elongation can be obtained. Accordingly, the first composition according to the present invention can be suitably used for an elastic body, and particularly, can be suitably used for an elastic body for hygienic products. Further, it can be suitably used for the following applications.

The second composition according to the present invention is excellent in hue and low odor property, and the elastic body excellent in ozone crack resistance can be obtained. Accordingly, the second composition according to the present invention can be suitably used for an elastic body, and can be particularly suitably used for an elastic body for hygienic products. Further, it can be suitably used for the following applications.

The first and second compositions and the elastic body according to the present invention can be used for, for example, films, yarns (elastic strands), gloves, elastic bands, condoms, OA equipment, rolls for office equipment, and the like, forming materials used for vibration-proof sheets for electrical and electronic equipment, vibration-proof rubbers, shock absorbing sheets, shock cushioning films or sheets, residential vibration-proof sheets, vibration-damper materials, and the like, adhesive applications used for adhesive tapes, adhesive sheets, adhesive labels, various removing rollers, and the like, adhesive applications used for hygienic products and bookbinding, and elastic fiber applications used for clothing, sports products, and the like.

The first and second compositions and the elastic body according to the present invention can be suitably used for a film, and particularly, can be suitably used for an elastic film for hygienic products. Since the elastic body and the film according to the present invention are obtained from the first and second compositions according to the present invention, they have high strength and are rich in stretchability, yet have little variation in film thickness and have small permanent elongation. Further, the first and second compositions and the elastic body according to the present invention can be suitably used also as a yarn (elastic strand).

Thickness of the film according to the present invention is not particularly limited and is adjusted depending on the application, but is usually 0.01 to 5 mm, preferably 0.01 to 1 mm, and more preferably 0.02 to 0.2 mm, when the film is a film for hygienic products such as paper diapers and sanitary products.

The method of forming the first and second compositions of the present invention into a film is not particularly limited, and a conventionally known film forming method can be applied, but from the viewpoint of obtaining a smooth film with good productivity, extrusion molding is suitable, and among them, extrusion molding using a T-die is particularly suitable.

Specific examples of extrusion molding using a T-die include a method in which a composition melted at 150 to 250°C is extruded from a T-die mounted on a single-screw extruder or a twin-screw extruder and wound up while being cooled by a take-up roll. The film may be stretched as it cools on a take-up roll. In addition, when the film is wound, a melt of the composition may be formed into a film while coating a melt of the composition on a substrate made of polyethylene terephthalate, polyethylene, polypropylene, a nonwoven fabric or a release paper, or a melt of the composition may be formed into a film so as to be sandwiched between these substrates. The film thus obtained may be used as an integral form with substrate or may be peeled off from substrate and used.

The elastic body and the film according to the present invention are excellent in film thickness uniformity.

The fact that the elastic body and the film according to the present invention are excellent in the uniformity of the film thickness can be confirmed by the fact that the ratio of the standard deviation (standard deviation/average value) of the film thickness to the average value of the film thickness is usually 30% or less, preferably 20% or less. The ratio of the standard deviation (standard deviation/average value) of the film thickness to the average value of the film thickness is measured, for example, by a method where a film to be a sample is cut out at a length of 30 cm along the melt flow direction at the time of forming, thickness of the film is measured at 15 points at every 2 cm interval along the melt flow direction in the central portion of the film using a digital thickness meter (manufactured by Toyoseiki Co., Ltd., measurement accuracy: 0.001 mm unit), and the ratio of the standard deviation (standard deviation/average value) of the film thickness to the average value of the film thickness is obtained from these measured values.

The permanent elongation of the elastic body and the film according to the present invention is usually 5% or less, preferably 2% or less. The permanent elongation of the film can be determined by the method described in Examples.

Depending on the application, the elastic body and the film according to the present invention can be used as a single layer or can be laminated with other members and used as a multilayer body. Specific examples of the case of using a single layer as it is include an elastic film used for hygienic products such as paper diapers and sanitary products, a protective film for protecting an optical film and the like, and a heat shrinkable film used for shrink packaging of containers and heat shrinkable labels. As a specific example in the case of forming a multilayer body, there may be mentioned a case in which a film according to the present invention is subjected to slit processing, and then a hot melt adhesive or the like is applied thereto to form a tape, and the tape is adhered to a nonwoven fabric, a woven fabric, a plastic film, or a laminate thereof in a state in which the tape is shrunk, and the shrinkage of the tape is reduced, thereby forming a stretchable gather member. Further, according to other applications, it may be appropriately processed according to known methods, and may be used, for example, as a stretchable member such as a stretchable poultice substrate, a glove, a surgical glove, a finger sack, a hemostatic band, a contraceptive device, a headband, a goggle band, or a rubber band.

EXAMPLES

Hereinafter, the present invention will be described specifically by way of Examples and Comparative Examples. In each Examples and Comparative Examples, the term "parts" is based on weight unless otherwise specified. Note that the tests and the evaluations were carried out as follows.

[Weight average molecular weight of each block copolymer]

The weight average molecular weight was determined as a molecular weight in terms of polystyrene by high performance liquid chromatography using tetrahydrofuran having a flow rate of 0.35 ml/min as a carrier. The device used was a HLC8320 manufactured by Tosoh, a column connected with three Shodex KF-404HQ manufactured by Showa Denko K. K. (column temperature: 40°C), a differential refractometer and an ultraviolet detector as detectors, and the molecular weight was calibrated at 12 points of standard polystyrenes (500 to 3 million) manufactured by Tosoh.

[Weight ratio of each block copolymer in mixture of block copolymer composition]

It was determined from the area ratio of the peak corresponding to each block copolymer of the chart obtained by high performance liquid chromatography described above.

[Weight average molecular weight of styrene polymer block of each block copolymer]

According to the process described in Rubber Chem. Technol., 45, 1295 (1972), the block copolymer was reacted with ozone and reduced with lithium aluminum hydride to decompose the isoprene polymer block of the block copolymer. Specifically, the following procedure was performed. That is, 300 mg of the sample was dissolved in a reaction vessel containing 100 ml of dichloromethane treated with molecular sieves. This reaction vessel was placed and cooled to -25°C in a cooling tank, and ozone generated by an ozone generator was introduced while oxygen was flowed into the reaction vessel at a flow rate of 170 ml/min. After 30 minutes from the start of the reaction, it was confirmed that the reaction was completed by introducing the gas flowing out of the reaction vessel into the aqueous potassium iodide solution. Then, 50 ml of diethyl ether and 470 mg of lithium aluminum hydride were charged into another reaction vessel subjected to nitrogen substitution, and a solution reacted with ozone was slowly added dropwise to this reaction vessel while cooling the reaction vessel with ice water. Then, the reaction vessel was placed in a water bath, and the temperature was gradually increased to reflux at 40°C for 30 minutes. Thereafter, while stirring the solution, dilute hydrochloric acid was added dropwise in small portions to the reaction vessel, and dropping was continued until the generation of hydrogen was hardly recognized. After this reaction, the solid product formed in the solution was filtered off and the solid product was extracted with 100 ml of diethyl ether for 10 minutes. The extract was combined with the filtrate after filtration, and the solvent was distilled off to obtain a solid sample. With respect to the sample thus obtained, the weight average molecular weight was measured according to the method of measuring the weight average molecular weight described above, and the value thereof was defined as the weight average molecular weight of the styrene polymer block.

[Weight average molecular weight of isoprene polymer block of each block copolymer]

From the weight average molecular weight of the block copolymer determined as described above, the weight average molecular weight of the corresponding styrene polymer block was subtracted, and the weight average molecular weight of the isoprene polymer block was determined based on the calculated value.

[Vinyl bond content of isoprene polymer block of each block copolymer]

It was determined based on the measurement of proton NMR.

[Styrene unit content of each block copolymer]

It was determined based on the detection intensity ratio between the differential refractometer and the ultraviolet detector in the measurement of the high performance liquid chromatography. Note that, in advance, copolymers having different styrene unit contents were prepared, and using them, a calibration curve was prepared.

[Uniformity of film thickness (variation of film thickness)]

The film was cut off at a length of 30 cm along the melting flow direction at the time of forming, at the center portion of the film, thickness of the film at every 2 cm interval along the melting flow direction, 15 points for the film was measured using a digital thickness measuring instrument (Toyoseiki Co., Ltd., measurement accuracy: 0.001 mm unit), the average value and the standard deviation of these measurements obtained, then the ratio of the standard deviation of the film thickness to the average value of the film thickness (standard deviation/average value) was determined. It was evaluated by the following criteria. It can be said that the smaller the ratio, the higher the uniformity of the film thickness of the film, and the better the formability of the composition used for forming.

Good : 20% or less
Fair : more than 20% and 30% or less
Poor : more than 30%

[Permanent elongation of film]

It was measured using a Tensilon universal testing machine RTC-1210 manufactured by ORIENTEC Co. Ltd. in accordance with ASTM 412. Specifically, as the sample shape, Die A was used, the film was elongated at an elongation ratio of 200% as the distance between the markers before stretching of 40 mm, after holding for 10 minutes in the as-is condition, it is rapidly shrunk without splashing, left for 10 minutes, the distance between the markers was measured, the permanent elongation was determined based on the following equation.

$$\text{Permanent elongation (\%)} = (L1-L0)/L0 \times 100$$

L0: Distance between the markers before stretching (mm)
L1: Distance between the markers after 10 minutes of shrinkage (mm)

In this measurement, two films were used, one of the two films was measured along the melting flow direction (MD) at the time of forming, and the other was measured along the vertical direction to melting flow direction (CD) at the time of forming, and it was evaluated based on the following criteria.
Permanent elongation of melting flow direction (MD)

Good : 2% or less
Fair : more than 2% and 5% or less
Poor : more than 5%

Permanent elongation in the vertical direction to melting flow (CD)

Good : 2% or less
Fair : more than 2% and 5% or less
Poor : more than 5%

[Ozone crack resistance of film]

The film was fixed to a tension holder with a chuck-to-chuck distance of 4.0 cm. The chuck-to-chuck distance was then extended to 5.0 cm and the film was fixed in a 25% elongation state. The fixed film was left in a constant temperature bath at 30°C, 50%RH, and ozone-concentration 5 pphm, and the time until cracks could be confirmed by the naked eye was measured and evaluated on the basis of the following criteria.

Good : No crack occurred after more than 2 hours.
Poor : Crack occurred within 2 hours.

[Film hue]

The Gardner color scale of the film was measured according to JIS K0071-2 and evaluated according to the following criteria.

Good : Gardner color scale of less than 2
Poor : Gardner color scale of 2 or more

[Film odor]

The film was subjected to sensory tests according to the odor intensity labeling method in the olfactometry method of odor published by the Japan Association on Odor Environment.

Specifically, first, a film having a size of 100 mm × 300 mm was placed in a heat-resistant container of 120 mL and covered with an aluminum foil. Then, the heat-resistance container containing this film was placed in an oven and heated under a condition of a temperature of 140°C, 20 minutes, and an odor after heating was confirmed. Confirmation of the odor was carried out on six panels. To prevent olfactory fatigue, six panels were divided into two groups of three panels, and test group was smelled. The order of odor-sniffing samples was also randomized.

0: no odor
1: only perceptible odor (detection threshold concentration)
2: weak smell where panels can tell what the smell is (cognitive threshold concentration)
3: smell that can be easily sensed
4: strong smell
5: intense smell

Incidentally, the results of the sensory tests were obtained by averaging the remaining four panels determination values except for the maximum value and the minimum value among the determination values of the six panels, respectively, and evaluated by the following criteria.

Good : sensory test values of less than 3
Poor : sensory test values of 3 or more

[Production Example 1]

To the pressure-resistant reactor, 23.3 kg of cyclohexane, 1.4 mmol of N,N,N',N'-tetramethylethylenediamine (hereinafter referred to as "TMEDA") and 1.04 kg of styrene were added. While stirring the mixture at 40°C, 92.9 mmol of n-butyllithium was added, and the mixture was polymerized for 1 hour while raising the temperature to 50°C. The polymerization conversion of styrene was 100% by weight. Subsequently, 5.66 kg of isoprene was continuously added to the reactor over a period of 1 hour while the temperature was controlled to keep the temperature between 50 and 60°C. After completing the addition of isoprene, it was further polymerized for 1 hour. The polymerization conversion of isoprene was 100%. Next, 1.04 kg of styrene was continuously added over 1 hour, with temperature control to keep 50 to 60°C. After completing the addition of styrene, a polymerization reaction was further performed for 1 hour to form a triblock chain having an active terminal. The polymerization conversion of styrene was 100% by weight. Then, 63.4 mmol of methanol was added as a polymerization terminator and mixed to deactivate a portion of the active terminals of the triblock chains having the active terminals to form a styrene-isoprene-styrene triblock copolymer B1. Thereafter, 0.98 kg of styrene was continuously added for 1 hour while temperature control was further carried out to keep the temperature between 50 and 60°C. After completing the addition of styrene, a polymerization reaction was further performed for 1 hour to form a triblock chain having an active terminal. The polymerization conversion of styrene was 100% by weight. Finally, 63.4 mmol of methanol was added as a polymerization terminator and mixed to deactivate all of the active terminals of the triblock chains to form styrene-isoprene-styrene triblock copolymer A1. A portion of the obtained reaction solution was taken out, and the block copolymer was evaluated according to the above measurement method. The results are shown in Table 2.

To 100 parts of the reaction solution obtained as described above (containing 30 parts of the polymer component), 0.3 parts of 2,6-di-tert-butyl-p-cresol was added as an antioxidant and mixed, and the mixed solution was dropped into hot water heated to 85 to 95°C in small portions to volatilize the solvent to obtain a precipitate, and the precipitate was pulverized and hot air dried at 85°C, whereby a mixture containing the block copolymer A1 and the block copolymer B1 was recovered.

The weight ratio of the block copolymer A1 and the block copolymer B1 in the above mixture (block copolymer Al/block copolymer B1) was 40/60.

[Production Examples 2 to 4]

A reaction solution and a mixture were obtained in the same manner as in Production Example 1, except that the amounts of raw materials such as styrene and isoprene used were changed as shown in Table 1. The evaluation results are shown in Table 2.

Table 1

Table 1

|  |  | Production Example | | | |
| --- | --- | --- | --- | --- | --- |
|  |  | 1 | 2 | 3 | 4 |
| Cyclohexane (kg) |  | 23.3 | 23.3 | 23.3 | 23.3 |
| TMEDA (mmol) |  | 1.4 | 1.4 | 1.4 | 1.3 |
| n-butyllithium (mmol) |  | 92.9 | 93.0 | 93.0 | 86.7 |
| Styrene (kg) | [First stage of polymerization] | 1.04 | 1.05 | 0.89 | 1.14 |
| Isoprene (kg) | [Second stage of polymerization] | 5.66 | 5.66 | 5.66 | 4.52 |
| Styrene (kg) | [Third stage of polymerization] | 1.04 | 1.05 | 0.89 | 1.14 |
| Methanol (mmol) | [After third stage of polymerization] | 63.4 | 55.8 | 58.2 | 52.0 |
| Styrene (kg) | [Fourth stage of polymerization] | 0.98 | 0.95 | 1.26 | 1.95 |
| Methanol (mmol) | [After fourth stage of polymerization] | 63.4 | 55.8 | 58.2 | 52.0 |

Table 2

Table 2

|  | Production Example 1 | Production Example 2 | Production Example 3 | Production Example 4 |
| --- | --- | --- | --- | --- |
| Block copolymer A | A1 | A2 | A3 | A4 |
| Weight average molecular weight ($\times 10^3$) | 173 | 158 | 178 | 195 |
| Weight average molecular weight of Ar1[a] ($\times 10^3$) | 12 | 12 | 11 | 14 |
| Weight average molecular weight of Ar2[a] ($\times 10^3$) | 67 | 50 | 70 | 100 |
| Vinyl bond content of D[a] (mol%) | 7 | 7 | 7 | 7 |
| Weight average molecular weight of D[a] ($\times 10^3$) | 96 | 96 | 97 | 84 |
| Styrene unit content (wt%) | 48 | 44 | 48 | 60 |
| Block copolymer B | B1 | B2 | B3 | B4 |
| Weight average molecular weight ($\times 10^3$) | 120 | 120 | 118 | 110 |

(continued)

| | Production Example 1 | Production Example 2 | Production Example 3 | Production Example 4 |
|---|---|---|---|---|
| Weight average molecular weight of Ar1[b] ($\times 10^3$) | 12 | 12 | 11 | 14 |
| Weight average molecular weight of Ar2[b] ($\times 10^3$) | 12 | 12 | 11 | 14 |
| Vinyl bond content of D[b] (mol%) | 7 | 7 | 7 | 7 |
| Weight average molecular weight of D[b] ($\times 10^3$) | 96 | 96 | 97 | 84 |
| Styrene unit content (wt%) | 27 | 27 | 24 | 33 |
| Weight ratio A/B | 40/60 | 47/53 | 46/54 | 53/47 |

[Production Example 5]

To the pressure-resistant reactor, 23.2 kg of cyclohexane, 1.5 mmol of N,N,N',N'-tetramethylethylenediamine (hereinafter referred to as "TMEDA") and 1.20 kg of styrene were added. While stirring the mixture at 40°C, 101.7 mmol of n-butyllithium was added, and the mixture was polymerized for 1 hour while raising the temperature to 50°C. The polymerization conversion of styrene was 100% by weight. Subsequently, 6.53kg of isoprene was continuously added to the reactor over a period of 1 hour while the temperature was controlled to keep the temperature between 50 and 60°C. After completing the addition of isoprene, it was further polymerized for 1 hour to form a diblock chain having an active terminal. The polymerization conversion of isoprene was 100%. Then, as a coupling agent, 25.4 mmol of dimethyldichlorosilane and 9.7 mmol of tetramethoxysilane were added to perform the coupling reaction for 2 hours to form a styrene-isoprene coupling block copolymer C1. Thereafter, 203 mmol of methanol was added as a polymerization terminator and mixed to deactivate all of the active terminals of the diblock chains to form a styrene-isoprene diblock copolymer D1. A portion of the obtained reaction solution was taken out, and the block copolymer was evaluated according to the above measurement method. The results are shown in Table 4.
To 100 parts of the reaction solution obtained as described above, 0.3 parts of 2,6-di-tert-butyl-p-cresol as an antioxidant was added and mixed, and the mixed solution was added dropwise into hot water heated to 85 to 95°C in small portions to volatilize the solvent to obtain a precipitate, and the precipitate was pulverized and hot air dried at 85°C, whereby a mixture containing the block copolymer C1 and the block copolymer D1 was recovered.
The weight ratio of the block copolymer C1 and the block copolymer D1 in the above mixture (block copolymer C1/block copolymer D1) was 90/10.

[Production Example 6 to 7]

A reaction solution and a mixture were obtained in the same manner as in Production Example 4, except that the amount of raw materials such as styrene and isoprene used was changed as shown in Table 3. The evaluation results are shown in Table 4.

Table 3

Table 3

| | Production Example | | |
|---|---|---|---|
| | 5 | 6 | 7 |
| Cyclohexane (kg) | 23.2 | 23.2 | 23.2 |
| TMEDA (mmol) | 1.5 | 1.5 | 1.5 |
| n-butyllithium (mmol) | 101.7 | 99.1 | 110.7 |

(continued)

|  |  | Production Example | | |
|---|---|---|---|---|
|  |  | 5 | 6 | 7 |
| Styrene (kg) | [First stage of polymerization] | 1.20 | 1.70 | 1.90 |
| Isoprene (kg) | [Second stage of polymerization] | 6.53 | 6.03 | 5.80 |
| Dimethyldichlorosilane (mmol) | [After second stage of polymerization] | 25.4 | 15.0 | 41.8 |
| Tetramethoxysilane (mmol) | [After second stage of polymerization] | 9.7 | - | - |
| Methanol (mmol) | [After second stage of polymerization] | 203 | 200 | 221 |

Table 4

Table 4

|  | Production Example 5 | Production Example 6 | Production Example 7 |
|---|---|---|---|
| Block copolymer C | C1 | C2 | C3 |
| Ratio of branch number n=2 (wt%) | 56 | 100 | 100 |
| Ratio of branch number n=3 (wt%) | 22 | 0 | 0 |
| Ratio of branch number n=4 (wt%) | 22 | 0 | 0 |
| Weight average molecular weight ($\times 10^3$) | 250 | 190 | 158 |
| Weight average molecular weight of $Ar^c$ ($\times 10^3$) | 9 | 16 | 15 |
| Vinyl bond content of $D^c$ (mol%) | 7 | 7 | 7 |
| Weight average molecular weight of $D^c$ ($\times 10^3$) | 105 | 80 | 64 |
| Styrene unit content (wt%) | 14 | 24 | 25 |
| Block copolymer D | D1 | D2 | D3 |
| Weight average molecular weight ($\times 10^3$) | 112 | 95 | 79 |
| Weight average molecular weight of $Ar^d$ ($\times 10^3$) | 9 | 16 | 15 |
| Vinyl bond content of $D^d$ (mol%) | 7 | 7 | 7 |
| Weight average molecular weight of $D^d$ ($\times 10^3$) | 105 | 80 | 64 |
| Styrene unit content (wt%) | 14 | 24 | 25 |
| Weight ratio C/D | 90/10 | 32/68 | 82/18 |

[Example 1]

The mixture obtained in Production Example 1 and the mixture obtained in Production Example 5 were mixed so as to have a weight ratio of each block copolymer described in Table 5 to prepare a composition. The resulting composition was introduced into a twin screw extruder fitted with a T-die. Then, in this twin screw extruder, these were heated and melted at 200°C, kneaded, and this was extruded so as to be sandwiched between PET mold release films continuously for 20 minutes, thereby forming a film having a mean thickness 0.05 mm. The film of Example 1 thus obtained was measured for film thickness variation and permanent elongation. The results are shown in Table 5. The details of the forming conditions of the film are as follows.

(Forming conditions for films)

compound processing rate: 5 kg/hour
film take-off speed: 4 m/minute
extruder temperature: adjusted to inlet of 100°C and T-die of 200°C
screw: full flight
extruder L/D: 30
T-die: 200 mm wide, 0.5 mm lip

[Examples 2 to 3, Comparative Examples 1 to 4]

A composition and a film were obtained in the same manner as in Example 1, except that the weight ratio of each block copolymer was changed as shown in Table 5, and evaluated in the same manner. The results are shown in Table 5.

Table 5

Table 5

| | Styrene unit content (wt%) | Example (wt%) | | | Comparative Example (wt%) | | | |
|---|---|---|---|---|---|---|---|---|
| | | 1 | 2 | 3 | 1 | 2 | 3 | 4 |
| | | | | | | | | |
| A1 | 48 | 20 | | | | | 20 | |
| A2 | 44 | | 23.5 | | | | | |
| A3 | 48 | | | 23 | | | | |
| A4 | 60 | | | | 26.5 | 26.5 | | 26.5 |
| | | | | | | | | |
| B1 | 27 | 30 | | | | | 30 | |
| B2 | 24 | | 26.5 | | | | | |
| B3 | 24 | | | 27 | | | | |
| B4 | 33 | | | | 23.5 | 23.5 | | 23.5 |
| | | | | | | | | |
| C1 | 14 | 45 | 45 | 45 | | | | 45 |
| C2 | 24 | | | | 16 | | | |
| C3 | 25 | | | | | 41 | 41 | |
| | | | | | | | | |
| D1 | 14 | 5 | 5 | 5 | | | | 5 |
| D2 | 24 | | | | 34 | | | |
| D3 | 25 | | | | | 9 | 9 | |
| Variation in film thickness | | Good | Good | Good | Poor | Poor | Fair | Fair |
| Permanent elongation (CD) | | Good | Good | Good | Poor | Poor | Fair | Fair |
| Permanent elongation (MD) | | Good | Good | Good | Poor | Poor | Poor | Poor |

As the results shown in Table 5, when the three block copolymers having different structures were used in combination and the weight average molecular weight of each block constituting each block copolymer and the content of the aromatic vinyl monomer unit in each block copolymer were appropriately adjusted, a composition having excellent formability was obtained, and a film having a small variation in film thickness and a small permanent elongation was obtained (Examples 1 to 3).

On the other hand, even when three block copolymers having different structures were used in combination, when a block copolymer having too large a content of the aromatic vinyl monomer unit was contained, formability of the composition was not sufficient, variation in film thickness of the obtained film was large, and permanent elongation was also large (Comparative Examples 1 to 4).

[Example 4]

100 parts of the composition prepared in Example 1 and 3 parts of an additive having the formulation set forth in Table 7 were charged to a twin screw extruder fitted with a T-die. Then, in this twin screw extruder, these were heated and melted at 200°C, kneaded, and this was extruded so as to be sandwiched between PET mold release films continuously for 20 minutes, thereby forming a film having a mean thickness 0.05 mm. The film of Example 4 thus obtained was measured for film thickness variation and permanent elongation. The results are shown in Table 8. The details of the forming conditions of the film are as follows. Further, the weight ratio (n-structure/iso- structure) and the melting point of the additive shown in Table 7 are shown in Table 6.

(Forming conditions for films)

compound processing rate: 5 kg/hour
film take-off speed: 4 m/minute
extruder temperature: adjusted to inlet of 100°C and T-die of 200°C
screw: full flight
extruder L/D: 30
T-die: 200 mm wide, 0.5 mm lip

[Examples 5 to 14]

A film was obtained and evaluated in the same manner as in Example 4, except that the type and amount of the additive were changed as described in Table 8. The results are shown in Table 8.

[Reference Examples 5 to 11]

A film was obtained and evaluated in the same manner as in Example 4, except that the type and amount of the additive were changed as described in Table 9. The results are shown in Table 9.

Table 6

Table 6

| | | Weight ratio | | Melting point |
| --- | --- | --- | --- | --- |
| | | n-structure | iso-structure | |
| | | % | % | ° C |
| Additive A | Petroleum wax | 90 | 10 | 59 |
| Additive B | Petroleum wax | 90 | 10 | 48 |
| Additive C | Petroleum wax | 79 | 21 | 58 |
| Additive D | Petroleum wax | 83 | 17 | 70 |
| Additive E | Petroleum wax | 92 | 8 | 80 |

(continued)

|  |  | Weight ratio | | Melting point |
| --- | --- | --- | --- | --- |
|  |  | n-structure | iso-structure |  |
|  |  | % | % | ° C |
| Additive F | Polyethylene wax | 100 | 0 | 106 |
| Additive G | Polyethylene wax | 100 | 0 | 113 |
| Additive H | Polyethylene wax | 100 | 0 | 92 |
| Additive I | Oleic amide | - | - | 75 |
| Additive J | N-phenyl-N'-(1,3-dimethylbutyl) -p-phenylenediamine | - | - | 44 |
| Additive K | Petroleum wax | 25 | 75 | 64 |

Table 7

Table 7

| | | | Formulation 1 | Formulation 2 | Formulation 3 | Formulation 4 | Formulation 5 | Formulation 6 | Formulation 7 | Formulation 8 | Formulation 9 | Formulation 10 | Formulation 11 | Formulation 12 | Formulation 13 |
|---|---|---|---|---|---|---|---|---|---|---|---|---|---|---|---|
| Formulation of additive | Additive A | % | 100 | | 50 | | 50 | | | | | | | | |
| | Additive B | % | | 100 | | | | | | | | | | | |
| | Additive C | % | | | 50 | 100 | | | | | | | | | |
| | Additive D | % | | | | | 50 | 100 | | | | | | | |
| | Additive E | % | | | | | | | 100 | | | | | | |
| | Additive F | % | | | | | | | | 100 | | | | | |
| | Additive G | % | | | | | | | | | 100 | | | | |
| | Additive H | % | | | | | | | | | | 100 | | | |
| | Additive I | % | | | | | | | | | | | 100 | | |
| | Additive J | % | | | | | | | | | | | | 100 | |
| | Additive K | % | | | | | | | | | | | | | 100 |

EP 3 845 599 A1

27

(continued)

| Property of additive | | Formulation 1 | Formulation 2 | Formulation 3 | Formulation 4 | Formulation 5 | Formulation 6 | Formulation 7 | Formulation 8 | Formulation 9 | Formulation 10 | Formulation 11 | Formulation 12 | Formulation 13 |
|---|---|---|---|---|---|---|---|---|---|---|---|---|---|---|
| Melting point | °C | 59 | 48 | 59 | 58 | 65 | 70 | 80 | 106 | 113 | 92 | 75 | 44 | 64 |
| n-structure | % | 90 | 90 | 84 | 79 | 87 | 83 | 92 | 100 | 100 | 100 | - | - | 25 |
| iso-structure | % | 10 | 10 | 16 | 21 | 13 | 17 | 8 | 0 | 0 | 0 | - | - | 75 |

Table 8

Table 8

| | Styrene unit content (wt%) | Example (wt%) | | | | | | | | | | | |
|---|---|---|---|---|---|---|---|---|---|---|---|---|---|
| | | Example 4 | Example 5 | Example 6 | Example 7 | Example 8 | Example 9 | Example 10 | Example 11 | Example 12 | Example 13 | Example 14 |
| A1 | 48 | 20 | 20 | 20 | 20 | 20 | 20 | 20 | 20 | 20 | 20 | 20 |
| A2 | 44 | | | | | | | | | | | |
| A3 | 48 | | | | | | | | | | | |
| A4 | 60 | | | | | | | | | | | |
| B1 | 27 | 30 | 30 | 30 | 30 | 30 | 30 | 30 | 30 | 30 | 30 | 30 |
| B2 | 24 | | | | | | | | | | | |
| B3 | 24 | | | | | | | | | | | |
| B4 | 33 | | | | | | | | | | | |
| C1 | 14 | 45 | 45 | 45 | 45 | 45 | 45 | 45 | 45 | 45 | 45 | 45 |
| C2 | 24 | | | | | | | | | | | |
| C3 | 25 | | | | | | | | | | | |
| D1 | 14 | 5 | 5 | 5 | 5 | 5 | 5 | 5 | 5 | 5 | 5 | 5 |
| D2 | 24 | | | | | | | | | | | |
| D3 | 25 | | | | | | | | | | | |
| Additive | | Formu-lation 1 | Formu-lation 1 | Formu-lation 2 | Formu-lation 2 | Formu-lation 3 | Formu-lation 3 | Formu-lation 4 | Formu-lation 4 | Formu-lation 5 | Formu-lation 6 | Formu-lation 6 |
| | Parts | 3 | 1 | 1 | 0.5 | 2 | 0.5 | 4 | 1 | 1 | 2 | 1 |
| Variation in film thickness | | Good | Good | Good | Good | Good | Good | Good | Good | Good | Good | Good |
| Permanent elongation (CD) | | Good | Good | Good | Good | Good | Good | Good | Good | Good | Good | Good |
| Permanent elongation (MD) | | Good | Good | Good | Good | Good | Good | Good | Good | Good | Good | Good |
| Ozone crack resistance | | Good | Good | Good | Good | Good | Good | Good | Good | Good | Good | Good |

(continued)

| Styrene unit content (wt%) | Example (wt%) | | | | | | | | | | |
| --- | --- | --- | --- | --- | --- | --- | --- | --- | --- | --- | --- |
| | Example 4 | Example 5 | Example 6 | Example 7 | Example 8 | Example 9 | Example 10 | Example 11 | Example 12 | Example 13 | Example 14 |
| Film hue | Good | Good | Good | Good | Good | Good | Good | Good | Good | Good | Good |
| Film odor | Good | Good | Good | Good | Good | Good | Good | Good | Good | Good | Good |

Table 9

Table 9

|  | Styrene unit content (wt%) | Reference Example (wt%) | | | | | | |
|---|---|---|---|---|---|---|---|---|
|  |  | Reference Example 5 | Reference Example 6 | Reference Example 7 | Reference Example 8 | Reference Example 9 | Reference Example 10 | Reference Example 11 |
| A1 | 48 | 20 | 20 | 20 | 20 | 20 | 20 | 20 |
| A2 | 44 | | | | | | | |
| A3 | 48 | | | | | | | |
| A4 | 60 | | | | | | | |
| B1 | 27 | 30 | 30 | 30 | 30 | 30 | 30 | 30 |
| B2 | 24 | | | | | | | |
| B3 | 24 | | | | | | | |
| B4 | 33 | | | | | | | |
| C1 | 14 | 45 | 45 | 45 | 45 | 45 | 45 | 45 |
| C2 | 24 | | | | | | | |
| C3 | 25 | | | | | | | |
| D1 | 14 | 5 | 5 | 5 | 5 | 5 | 5 | 5 |
| D2 | 24 | | | | | | | |
| D3 | 25 | | | | | | | |
| Additive | | Formu-lation 7 | Formu-lation 8 | Formu-lation 9 | Formu-lation 10 | Formu-lation 11 | Formu-lation 12 | Formu-lation 13 |
| | Parts | 3 | 3 | 3 | 3 | 1 | 1 | 3 |
| Variation in film thickness | | Good | Good | Good | Good | Good | Good | Good |
| Permanent elongation (CD) | | Good | Good | Good | Good | Good | Good | Good |
| Permanent elongation (MD) | | Good | Good | Good | Good | Good | Good | Good |
| Ozone crack resistance | | Poor | Poor | Poor | Poor | Good | Good | Poor |
| Film hue | | Good | Good | Good | Good | Good | Poor | Good |
| Film odor | | Good | Good | Good | Good | Poor | Poor | Good |

As the results shown in Table 8, when the wax containing the linear hydrocarbon and the branched hydrocarbon in a specific weight ratio and having the relatively low melting point wes added to the block copolymer, a composition excellent in hue and low odor property was obtained, and an elastic body excellent in ozone crack resistance was obtained (Examples 4 to 14).

On the other hand, as shown in the results in Table 9, when the wax having the relatively high melting point was added, an elastic body excellent in ozone crack resistance could not be obtained (Reference Example 5).

Further, as shown in the results in Table 9, even when the wax having the relatively high melting point and not containing the linear hydrocarbon and the branched hydrocarbon in an appropriate weight ratio was used, an elastic body excellent in ozone crack resistance could not be obtained (Reference Examples 6 to 8).

Furthermore, as shown in the results in Table 9, even when the wax not containing the linear hydrocarbon and the branched chain hydrocarbon in an appropriate weight ratio was used, an elastic body excellent in ozone crack resistance could not be obtained (Reference Example 11).

In addition, as shown in the results in Table 9, when an additive other than wax was used, the hue of the obtained composition was inferior, and the odor of the obtained composition was also strong (Reference Examples 9 to 10).

**Claims**

1. A composition comprising a block copolymer A, a block copolymer B, and a block copolymer C, wherein
   the block copolymer A is represented by general formula (A) : $Ar1^a$-$D^a$-$Ar2^a$, where $Ar1^a$ is an aromatic vinyl polymer block having a weight average molecular weight of 5000 to 20000, $D^a$ is a conjugated diene polymer block, and $Ar2^a$ is an aromatic vinyl polymer block having a weight average molecular weight of more than 20000 and 400000 or less,
   the block copolymer B is represented by general formula (B) : $Ar1^b$-$D^b$-$Ar2^b$, where $Ar1^b$ and $Ar2^b$ are each an aromatic vinyl polymer block having a weight average molecular weight of 5000 to 20000, and $D^b$ is a conjugated diene polymer block,
   the block copolymer C is represented by general formula (C) : $(Ar^c$-$D^c)_n$-X, where $Ar^c$ is an aromatic vinyl polymer block, $D^c$ is a conjugated diene polymer block, "n" represents an integer of 2 or more, and X is a residue of coupling agent,
   the content of the aromatic vinyl monomer unit of the block copolymer A is 40 to 50% by weight with respect to the total monomer unit constituting the block copolymer A,
   the content of the aromatic vinyl monomer unit of the block copolymer B is 20 to 30% by weight with respect to the total monomer unit constituting the block copolymer B, and
   the content of the aromatic vinyl monomer unit of the block copolymer C is less than 20% by weight with respect to the total monomer unit constituting the block copolymer C.

2. The composition according to claim 1, wherein the vinyl bond content of the conjugated diene polymer block ($D^a$) is 1 to 20 mol%, and the weight average molecular weight of the conjugated diene polymer block ($D^a$) is 40000 to 400000.

3. The composition according to claim 1 or 2, wherein the vinyl bond content of the conjugated diene polymer block ($D^b$) is 1 to 20 mol%, and the weight-average molecular weight of the conjugated diene polymer block ($D^b$) is 40000 to 400000.

4. The composition according to any one of claims 1 to 3, wherein the block copolymer A and the block copolymer B are obtained by a production method in which a polymer block is formed by sequentially polymerizing an aromatic vinyl monomer, a conjugated diene monomer, and an aromatic vinyl monomer in this order.

5. The composition according to any of claims 1 to 4, wherein "n" in the general formula (C) is an integer of 2 to 4.

6. The composition according to any one of claims 1 to 5, wherein the vinyl bond content of the conjugated diene polymer block ($D^c$) is 1 to 20 mol%, and the weight-average molecular weight of the conjugated diene polymer block ($D^c$) is 20000 to 200000.

7. The composition according to any one of claims 1 to 6, wherein the block copolymer C is obtained by a production method in which an aromatic vinyl monomer and a conjugated diene monomer are polymerized to form a diblock chain, and the diblock chain and a coupling agent are reacted to perform coupling.

8. The composition according to any one of claims 1 to 7, further comprising a block copolymer D, wherein the block copolymer D is represented by general formula (D) : $Ar^d$-$D^d$, where $Ar^d$ is an aromatic vinyl polymer block, $D^d$ is a conjugated diene polymer block, and the content of the aromatic vinyl monomer unit of the block copolymer D is less than 20% by weight with respect to the total monomer unit constituting the block copolymer D.

9. The composition according to any one of claims 1 to 8, further comprising a wax, wherein the wax contains a linear hydrocarbon and a branched hydrocarbon, and the weight ratio (n-structure/iso-structure) of the linear hydrocarbon (n-structure) and the branched hydrocarbon (iso-structure) is 30/70 to 99/1, the melting point of the wax is less than 80°C, and the content of the wax in the composition is 0.1 to 5 parts by weight, with respect to 100 parts by weight of the total of block copolymers in the composition.

10. A composition comprising a block copolymer having at least one aromatic vinyl polymer block and at least one conjugated diene polymer block, and a wax, wherein the wax contains a linear hydrocarbon and a branched hydrocarbon, and the weight ratio (n-structure/iso-structure) of the linear hydrocarbon (n-structure) and the branched hydrocarbon (iso-structure) is 30/70 to 99/1, the melting point of the wax is less than 80°C, and the content of the wax in the composition is 0.1 to 5 parts by weight, with respect to 100 parts by weight of the block copolymer in the composition.

11. An elastic body obtained from the composition according to any one of claims 1 to 10.

12. The elasticity body according to claim 11, which is an elastic body for hygienic material.

13. The elastic body according to claim 11 or 12, which is a film or yarn.

## INTERNATIONAL SEARCH REPORT

| International application No. |
| --- |
| PCT/JP2019/033703 |

**A. CLASSIFICATION OF SUBJECT MATTER**
Int.Cl.  C08L53/02(2006.01)i,  C08J5/18(2006.01)i,  D02G3/02(2006.01)i

According to International Patent Classification (IPC) or to both national classification and IPC

**B. FIELDS SEARCHED**

Minimum documentation searched (classification system followed by classification symbols)
Int.Cl.  C08L53/02,  C08J5/18,  D02G3/02

| Documentation searched other than minimum documentation to the extent that such documents are included in the fields searched | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2005-139326 A (ASAHI KASEI CHEMICALS CORP.) 02 June 2005, claims, paragraph [0001], examples (Family: none) | 10, 11, 13<br>1-9, 12 |
| X<br>A | JP 2012-25835 A (ASAHI KASEI CHEMICALS CORP.) 09 February 2012, examples (Family: none) | 10, 11, 13<br>1-9, 12 |
| A | JP 2009-227917 A (KURARAY CO., LTD.) 08 October 2009, entire text (Family: none) | 1-13 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 28 October 2019 (28.10.2019) | 05 November 2019 (05.11.2019) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**INTERNATIONAL SEARCH REPORT**

| International application No. |
| --- |
| PCT/JP2019/033703 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | WO 2010/74267 A1 (NIPPON ZEON CO., LTD.) 01 July 2010, entire text & US 2011/0257337 A1, entire text & EP 2371921 A1 & CN 102264854 A | 1-13 |
| A | WO 2010/74270 A1 (NIPPON ZEON CO., LTD.) 01 July 2010, entire text & US 2011/0257336 A1, entire text & EP 2371900 A1 & CN 102264832 A | 1-13 |
| A | JP 2010-150449 A (NIPPON ZEON CO., LTD.) 08 July 2010, entire text (Family: none) | 1-13 |
| A | WO 2015/111675 A1 (ASAHI KASEI CORPORATION) 30 July 2015, entire text & US 2016/0333235 A1, entire text & EP 3098264 A1 & CN 105916935 A & KR 10-2016-0103063 A & TW 201534677 A | 1-13 |
| A | JP 2016-60825 A (ASAHI KASEI CHEMICALS CORP.) 25 April 2016, entire text (Family: none) | 1-13 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016069565 A

**Non-patent literature cited in the description**

- *Rubber Chem. Technol.,* 1972, vol. 45, 1295